(19) Europäisches Patentamt / European Patent Office / Office européen des brevets

(11) **EP 1 929 353 B1**

(12) **EUROPÄISCHE PATENTSCHRIFT**

(45) Veröffentlichungstag und Bekanntmachung des Hinweises auf die Patenterteilung:
**11.04.2012   Patentblatt 2012/15**

(21) Anmeldenummer: **06792055.3**

(22) Anmeldetag: **14.09.2006**

(51) Int Cl.:
*G02B 21/36* *(2006.01)*

(86) Internationale Anmeldenummer:
**PCT/EP2006/008947**

(87) Internationale Veröffentlichungsnummer:
**WO 2007/039054 (12.04.2007 Gazette 2007/15)**

(54) **VERFAHREN ZUR ERZEUGUNG VON DARSTELLUNGSBILDERN AUS ERFASSTEN AUFNAHMEBILDERN UND MITTEL ZUR DURCHFÜHRUNG DES VERFAHRENS**

PROCESS FOR GENERATING DISPLAY IMAGES FROM ACQUIRED RECORDED IMAGES, AND MEANS FOR CARRYING OUT THE PROCESS

PROCEDE POUR PRODUIRE DES IMAGES DE REPRESENTATION A PARTIR D'IMAGES DETERMINEES ET ORGANES PERMETTANT DE REALISER LEDIT PROCEDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.10.2005   DE 102005047261**

(43) Veröffentlichungstag der Anmeldung:
**11.06.2008   Patentblatt 2008/24**

(73) Patentinhaber: **Carl Zeiss MicroImaging GmbH**
**07745 Jena (DE)**

(72) Erfinder: **STEINERT, Jörg**
**07743 Jena (DE)**

(74) Vertreter: **Hampe, Holger**
**Carl Zeiss Jena GmbH,**
**Zentralbereich Recht und Patente,**
**Patentabteilung**
**Carl-Zeiss-Promenade 10**
**07745 Jena (DE)**

(56) Entgegenhaltungen:
**WO-A-02/059692     DE-A1- 10 257 237**
**US-A- 4 661 986**

• **H-J JORDAN ET AL: "Highly accurate non-contact characterization of engineering surfaces using confocal microscopy" MEASUREMENT SCIENCE AND TECHNOLOGY, IOP, BRISTOL, GB, Bd. 9, Nr. 7, 1. Juli 1998 (1998-07-01), Seiten 1142-1151, XP020064540 ISSN: 0957-0233**

**Beschreibung**

Die vorliegende Erfindung bezieht sich auf Verfahren zur Erzeugung von Darstellungsbildern aus erfaßten Aufnahmebildern sowie Mittel zur Durchführung des Verfahrens.

Bei vielen optischen bzw. optisch elektronischen Geräten, die Bilder eines Objekts mittels wenigstens eines Detektors erfassen und auf einer Anzeigeeinrichtung wie einem Monitor darstellen, können Bilder eines Objekts mit einer Aufnahmegeschwindigkeit erfaßt werden, die deutlich höher ist als die Bildwechselfrequenz der Anzeigeeinrichtung und/oder der vom menschlichen Auge noch zeitlich auflösbare Aufnahmebildrate.

Die Information, die in den Aufnahmebildern enthalten ist, kann daher bei bekannten optischen Geräten, insbesondere Mikroskopen, nicht für einen Menschen erfaßbar in Echtzeit dargestellt werden. Insbesondere ist Information über schnell ablaufende Vorgänge auf oder in dem Objekt nicht in Echtzeit zu verfolgen. Bekannte Geräte erlauben nur die nachträgliche Verfolgung der Zustandsänderungen nach Erfassung der gesamten Aufnahmebildfolge.

Der vorliegenden Erfindung liegt daher die Aufgabe zugrunde, zum einen ein Verfahren zur Bereitstellung von Informationen aus erfaßten Aufnahmebildern zu schaffen, das eine Darstellung bzw. Verfolgung von Zustandsänderungen in einem Objekt erlaubt, und zum anderen Mittel zur Durchführung des Verfahrens bereitzustellen. Vorzugsweise soll eine Verfolgung solcher Zustandsänderungen mit dem menschlichen Auge ermöglicht werden, die schneller ablaufen, als vom menschlichen Auge erfaßbar ist oder als auf einer Anzeigeeinrichtung wie einem Monitor darstellbar ist,

Die Aufgabe wird gelöst durch ein Verfahren zur Erzeugung von Darstellungsbilderern nach Anspruch 1.

Die Aufgabe wird weiterhin gelöst durch ein Mikroskop nach Anspruch 11.

Die Aufgabe wird darüber hinaus gelöst durch ein Computerprogramm für eine Datenverarbeitungseinrichtung nach Anspruch 24.

Weiter wird die Aufgabe gelöst durch ein Speichermedium nach Anspruch 25. Als Speichermedium können insbesondere magnetische, magneto-optische und/oder optische Datenträger, beispielsweise Disketten, Festplatten, Compact Disks oder Digital Versatile Disks, oder nichtflüchtige Speicher wie EEPROMs oder Flashspeicher-Einrichtungen oder Kombinationen davon dienen.

Bei dem Verfahren wird eine zeitliche Folge von Aufnahmebildern von einem zu beobachtenden Objekt erfaßt. Unter einem Aufnahmebild und einem Darstellungsbild wird dabei jeweils eine Menge von Daten verstanden, die ein optisch erzeugtes oder optisch wahrnehmbares, vorzugsweise zweidimensionales Bild wiedergeben. Das Verfahren kann jedoch auch für dreidimensionale Bilder, beispielsweise in Form einer Menge von zweidimensionalen Bildern aufeinanderfolgender im wesentlichen parallel verlaufender Schichten des Objekts bzw. der Probe, verwendet werden. Es eignet sich daher insbesondere für die Laser-Scanning-Mikroskopie.

Die Aufnahmebilder können dabei im wesentlichen zu einem Zeitpunkt als ganze erfaßt werden oder - bei Darstellung in Form von Pixel - pixel- oder pixelgruppenweise. Bei einer pixel- oder pixelgruppenweisen Erfassung werden Bildsegmente, die ein oder mehrere Pixel umfassen, erfaßt und danach zu Aufnahmebildern zusammengesetzt.

Die Aufnahmebilder werden in zeitlicher Folge, d.h. nacheinander erfaßt, wobei grundsätzlich der zeitliche Abstand zwischen aufeinanderfolgenden Aufnahmebildern beliebig sein kann, vorzugsweise aber im wesentlichen konstant ist, was den Vorteil hat, daß eine Verarbeitung in Echtzeit erleichtert wird. Insbesondere kann der Abstand unmittelbar aufeinanderfolgender Bilder so klein sein, daß das menschliche Auge diese Bilder nicht mehr trennen kann bzw. daß diese Bilder nicht mehr in Echtzeit auf einem Anzeigegerät wie einem Monitor darstellbar sind.

Zur Erfassung der Aufnahmebilder verfügt die Bildverarbeitungseinrichtung über die Erfassungsschnittstelle zur Erfassung der Aufnahmebilddaten oder -signalen. Die Ausbildung der Erfassungsschnittstelle hängt dabei von der Art der zur Verwendung mit der Bildverarbeitungseinrichtung vorgesehenen Bildaufnahmeeinrichtung ab: gibt diese nur Signale ab, ist die Schnittstelle zum Empfang bzw. zum Einlesen der Signalen und die Bildverarbeitungseinrichtung zur Umsetzung der Signale in Daten ausgebildet. Gibt die Bildaufnahmeeinrichtung direkt Daten ab, braucht die Schnittstelle nur zum Einlesen oder zum Empfang dieser Daten ausgebildet zu sein. Dabei braucht die Schnittstelle nicht unbedingt zur Erfassung von Aufnahmebilddaten ausgebildet zu sein, die bereits ein vollständiges zweidimensionales Bild beschreiben. Vielmehr ist es auch möglich, daß die Bildverarbeitungseinrichtung so ausgebildet ist, daß sie Aufnahmebilddaten von Bildsegmenten, z.B. einzelnen Pixeln oder Pixelgruppen, über die Erfassungsschnittstelle empfängt bzw. einliest und die Bildsegmente dann zu Daten für ein Aufnahmebild, das die Bildsegmente umfaßt, zusammenfaßt. Insbesondere kann die Bildverarbeitungseinrichtung dazu zur Steuerung und/oder zur Erfassung einer Stellung einer Einrichtung ausgebildet sein, mittels derer Teile eines abzubildenden Objekts nacheinander, d.h. in scannender Weise, so auf die Bildaufnahmeeinrichtung abgebildet werden, daß insgesamt ein zweidimensionales Aufnahmebild des Objekts erfaßbar ist. Die Steuerung und/oder Erfassung erfolgt dabei in der Weise, daß aus den Bildsegmentdaten oder -signalen insgesamt das Aufnahmebild erstellbar ist.

Grundsätzlich kann zwischen der Erfassung der Aufnahmebilder und der Ermittlung und/oder Darstellung der Darstellungsbilder ein beliebiger Zeitraum liegen. Insbesondere kann die Ermittlung und/oder Darstellung erst nach Abschluß der Erfassung aller Aufnahmebilder des Objekts bzw. der Probe erfolgen. Das Verfahren wird jedoch vorzugsweise in Echtzeit während der Beobachtung eines Objekts durchgeführt, so daß die Bildverarbeitungseinrichtung vorzugsweise eine zur Verarbeitung der Aufnahmebildfolge in Echtzeit ausreichende Arbeitsgeschwindigkeit aufweist. Unter einer Verarbeitung in Echtzeit wird dabei insbesondere verstanden, daß ein einer Teilfolge von Aufnahmebildern zugeordnetes Darstellungsbild schon während der Erfassung einer der Teilfolge, vorzugsweise unmittelbar, nachfolgenden Teilfolge von Aufnahmebildern ermittelt und besonders bevorzugt auch angezeigt wird. Auf diese Weise können beispielsweise bei Verwendung in der Mikroskopie Vorgänge in lebenden Zellen unmittelbar durch die Darstellungsbilder dargestellt werden.

Aus einer Teilfolge mit wenigstens zwei Aufnahmebildern der Folge der Aufnahmebilder wird jeweils ein dieser Teilfolge zeitlich zugeordnetes Darstellungsbild erzeugt. Dabei werden vorzugsweise wenigstens einige der Darstellungsbilder schon während der Erfassung der. Folge der Aufnahmebilder erzeugt und besonders bevorzugt angezeigt. Hierzu können insbesondere alle Aufnahmebilder der Teilfolge verarbeitet werden. Vorzugsweise wird das jeweilige Darstellungsbild so bald wie es die Verarbeitungsgeschwindigkeit erlaubt, nach dem zeitlich letzten, d.h. zeitlich nächstliegenden Aufnahmebild der Teilfolge erzeugt. Dabei werden die Darstellungsbilder jeweils vorzugsweise in Abhängigkeit von den wenigstens zwei Aufnahmebildern der zugeordneten Darstellungsbilder erzeugt, daß zur Ermittlung der Darstellungsbilder Aufnahmebilddaten der beiden Aufnahmebilder ausgewertet werden.

Die Teilfolgen der Aufnahmebilder können dabei grundsätzlich beliebige, auch nicht konstante Anzahlen von Aufnahmebildern umfassen. Vorzugsweise enthalten jedoch alle Teilfolgen dieselbe vorgegebene Anzahl von Aufnahmebildern, besonders bevorzugt in der gleichen Reihenfolge. Dies hat den Vorteil, daß die Auswertung der Aufnahmebilder zur Erzeugung der Darstellungsbilder vereinfacht wird. Diese Anzahl kann insbesondere in Abhängigkeit von der Erfassungsrate der Aufnahmebilder und der gewünschten oder möglichen Anzeigefrequenz der Darstellungsbilder so gewählt sein, daß die Folge der Darstellungsbilder vom menschlichen Auge erfaßbar oder als auf einer Anzeigeeinrichtung darstellbar ist.

Aus der Folge der Aufnahmebilder, die über einen vorgegebenen Aufnahmezeitraum aufgenommen wurden, entsteht so eine Folge von Darstellungsbildern, die eine Auswertung der Aufnahmebilder darstellen und eine Darstellung bzw. Verfolgung von Zustandsänderungen erlauben.

Die Darstellungsbilder können dann über die Anzeigeeinrichtung ausgegeben werden, so daß ein Betrachter sie auf der Anzeigeeinrichtung beobachten kann. Die Bildverarbeitungseinrichtung verfügt hierzu über die Graphikschnittstelle, die beispielsweise durch eine Graphikkarte gegeben sein kann.

Die Bildverarbeitungseinrichtung kann zur Erzeugung der Darstellungsbilder grundsätzlich entsprechende elektronische Schaltungen umfassen, die nicht programmierbar sind. Solche Schaltungen können sich durch eine sehr hohe Arbeitsgeschwindigkeit auszeichnen.

Die Ausbildung der Bildverarbeitungseinrichtung, bei der diese die oben genannte Datenverarbeitungseinrichtung umfaßt, hat jedoch den Vorteil, daß durch entsprechende Programmierung verschiedene Methoden zur Erzeugung der Darstellungsbilder einfach implementiert und gegebenenfalls durch Aktualisierung des Computerprogramms auch aktualisiert werden können. Darüber hinaus brauchen keine speziellen elektronischen Schaltungen für die Erzeugung der Darstellungsbilder bereitgestellt zu werden. Der Speicher der Datenverarbeitungsrichtung kann mehrere Komponenten umfassen, beispielsweise einen flüchtigen Teil (RAM) und einen nichtflüchtigen Teil in Form eines EEPROMS oder eines Lesegeräts (CD- oder DVD-Laufwerk, USB-Schnittstelle) für ein Speichermedium mit dem Computerprogramm mit einem in das Lesegerät eingelegten oder an dieses angeschlossenen Speichermedium.

Die Folge der Darstellungsbilder kann beispielsweise ebensoviele Darstellungsbilder umfassen wie die Aufnahmebildfolge. Vorzugsweise ist jedoch bei dem Verfahren die Anzahl der Darstellungsbilder der Folge von Darstellungsbildern kleiner als die Anzahl der Aufnahmebilder (41) der Aufnahmebildfolge ist. Die Bildverarbeitungseinrichtung ist dazu vorzugsweise weiter so ausgebildet, daß die Anzahl der Darstellungsbilder der Folge von Darstellungsbildern kleiner als die Anzahl der Aufnahmebilder der Aufnahmebildfolge ist. Das Computerprogramm bzw. das Computerprogramm in Datenverarbeitungseinrichtung umfaßt dann vorzugsweise Instruktionen, so daß bei Ausführung der Instruktionen durch den Prozessor die Anzahl der Darstellungsbilder der Folge von Darstellungsbildern kleiner als die Anzahl der Aufnahmebilder der Aufnahmebildfolge ist. Die Ausführungsform, nach der die Folge der Darstellungsbilder eine geringere Anzahl von Darstellungsbildern umfaßt, hat den Vorteil, daß damit eine Datenreduktion bzw. Auswertung der Aufnahmebildfolge nach einem vorgegebenen Auswertungsschema erfolgt, die von Eigenschaften der Aufnahmebilder der jeweiligen Teilfolge, optional auch deren Aufnahmezeit bzw. Stellung in der Teilfolge, abhängt. Insbesondere kann sich bei Erzeugung und Wiedergabe der Darstellungsbilder über einen Zeitraum, der so lang ist wie der Aufnahmezeitraum eine geringere Darstellungsfrequenz ergeben, die eine Darstellung auf einem normalen Monitor erlaubt.

Die Darstellungsbilder können grundsätzlich aus beliebigen Teilfolgen von Aufnahmebildern gebildet werden. Vorzugsweise wird jedoch bei dem Verfahren zur Erzeugung der Darstellungsbilder wenigstens ein Darstellungsbild aus einer Teilfolge mit denjenigen Aufnahmebildern der Aufnahmebildfolge ermittelt, die, vorzugsweise nur, innerhalb eines vorgegebenen Zeitraums, der vorzugsweise 1 s beträgt, vor der Ermittlung des Darstellungsbildes erfaßt wurden. Die Bildverarbeitungseinrichtung ist dazu vorzugsweise weiter so ausgebildet, daß zur Erzeugung der Darstellungsbilder wenigstens ein Darstellungsbild aus einer Teilfolge mit denjenigen Aufnahmebilder der Aufnahmebildfolge ermittelt wird, die vorzugsweise nur, innerhalb eines vorgegebenen Zeitraums, der vorzugsweise 1 s beträgt, vor der Ermittlung des Darstellungsbildes erfaßt wurden. Das Computerprogramm bzw. das Computerprogramm in Datenverarbeitungseinrichtung umfaßt dann vorzugsweise Instruktionen, so daß der Prozessor bei Ausführung der Instruktionen zur Erzeugung der Darstellungsbilder wenigstens ein Darstellungsbild aus einer Teilfolge mit denjenigen Aufnahmebildern der Aufnahmebildfolge ermittelt, die vorzugsweise nur, innerhalb eines vorgegebenen Zeitraums, der vorzugsweise 1s beträgt, vor der Ermittlung des Darstellungsbildes erfaßt wurden. Diese Ausführungsform hat den Vorteil, daß eine Erzeugung der Darstellungsbilder wenigstens näherungsweise in Echtzeit erfolgen kann. Diese Ausführungsform eignet sich daher insbesondere auch für die Beobachtung von Proben während einer Untersuchung.

Prinzipiell überlappen sich die Teilfolgen von Aufnahmebildern, aus denen zwei aufeinanderfolgende Darstellungsbilder erzeugt werden, indem sie ein gleiches Aufnahmebild umfassen. Vorzugsweise wird jedoch bei dem Verfahren zur Erzeugung der Darstellungsbilder wenigstens ein Darstellungsbild aus einer Teilfolge mit denjenigen Aufnahmebildern der Aufnahmebildfolge ermittelt, die während oder nach der Ermittlung des unmittelbar dem Darstellungsbild vorhergehenden Darstellungsbildes erfaßt wurden. Die Bildverarbeitungseinrichtung ist dazu vorzugsweise weiter so ausgebildet, daß zur Erzeugung der Darstellungsbilder wenigstens ein Darstellungsbild aus einer Teilfolge mit denjenigen Aufnahmebildern der Aufnahmebildfolge ermittelt wird, die während oder nach der Ermittlung des unmittelbar dem Darstellungsbild vorhergehenden Darstellungsbildes erfaßt wurden. Das Computerprogramm bzw. das Computerprogramm in Datenverarbeitungseinrichtung umfaßt dann vorzugsweise Instruktionen, so daß der Prozessor bei Ausführung der Instruktionen zur Erzeugung der Darstellungsbilder wenigstens ein Darstellungsbild aus einer Teilfolge mit denjenigen Aufnahmebildern der Aufnahmebildfolge ermittelt, die während oder nach der Ermittlung des unmittelbar dem Darstellungsbild vorhergehenden Darstellungsbildes erfaßt wurden. Diese Ausführungsform hat den Vorteil, daß ein unmittelbar einem vorgegebenen Darstellungsbild folgendes Darstellungsbild nur Auswertungen von Informationen über den Zeitraum zwischen dem unmittelbar vorhergehenden Darstellungsbild und dem Darstellungsbild enthält und damit die Folge der Darstellungsbilder noch möglichst viel Information über die zeitliche Entwicklung des Objekts enthält. Insbesondere kann bei einer vorgegebenen Erfassungsrate für Aufnahmebilder aus einer Teilfolge mit einer vorgegebenen Anzahl K von Aufnahmebildern ein Darstellungsbild erzeugt werden, wobei das nächste Darstellungsbild aus einer nächsten Teilfolge mit derselben Anzahl von K Aufnahmebildern erzeugt wird, deren Aufnahmebilder denen der vorhergehenden Teilfolge nachfolgen. Dies bedeutet, daß die Folge der Darstellungsbilder eine um den Faktor K gegenüber der Aufnahmebildrate reduzierte Bildrate aufweist.

Grundsätzlich können die Aufnahme- und Darstellungsbilder in beliebiger Weise durch Daten repräsentiert sein. Es ist jedoch bei dem Verfahren bevorzugt, daß die Aufnahme- und die Darstellungsbilder durch eine Anordnung von Pixeln gebildet werden, und daß zur Erzeugung wenigstens eines Darstellungsbildes der Wert wenigstens eines Pixelparameters wenigstens eines Pixels des Darstellungsbildes aus Werten eines Pixelparameters wenigstens eines dem Pixel des jeweiligen Darstellungsbildes zugeordneten Aufnahmebildpixels in der dem Darstellungsbild zugeordneten Teilfolge von bereits erfaßten Aufnahmebildern ermittelt wird. Dazu werden bei der Bildverarbeitungseinrichtung die Aufnahme- und die Darstellungsbilder durch eine Anordnung von Pixeln gebildet, und die Bildverarbeitungseinrichtung ist weiter so ausgebildet, daß zur Ermittlung wenigstens eines Darstellungsbildes der Wert wenigstens eines Pixelparameters wenigstens eines Pixels des Darstellungsbildes aus Werten eines Pixelparameters wenigstens eines dem Pixel des jeweiligen Darstellungsbildes zugeordneten Aufnahmebildpixels in der dem Darstellungsbild zugeordneten Teilfolge von bereits erfaßten Aufnahmebildern ermittelt. Insbesondere können bei der Datenverarbeitungseinrichtung und dem Computerprogramm die Aufnahme- und die Darstellungsbilder durch eine Anordnung von Pixeln gebildet werden, und das Computerprogramm umfaßt Instruktionen, bei deren Ausführung der Prozessor zur Ermittlung wenigstens eines Darstellungsbildes den Wert wenigstens eines Pixelparameters wenigstens eines Pixels des Darstellungsbildes aus Werten eines Pixelparameters wenigstens eines dem Pixel des jeweiligen Darstellungsbildes zugeordneten Aufnahmebildpixels in der dem Darstellungsbild zugeordneten Teilfolge von bereits erfaßten Aufnahmebildern ermittelt. Die Verwendung von Pixeln zur Darstellung der Bilder erlaubt es in vorteilhafter Weise, bekannte Erfassungs- und Gräphikschnittstellen zu nutzen. Darüber können lokale Eigenschaften des Objekts durch pixelweise Verarbeitung leicht ausgewertet werden. Unter einem Pixelparameter für ein Pixel wird dabei ein dem Pixel bzw. der Pixelposition zugeordneter Parameter verstanden, der, gegebenenfalls in Verbindung mit anderen Pixelparametern für das Pixel, eine Eigenschaft des Bildelements wiedergibt. Bei der Eigenschaft kann es sich sowohl bei den Aufnahmebildern als auch den Darstellungsbildern beispielsweise um die Helligkeit, die Intensität, den Grauwert oder einen Parameter eines Farbmodells handeln. Die für die Aufnahmebildpixel verwendeten Pixelparameter können sich dabei von denen der Darstellungsbilder unterscheiden.

Insbesondere kann bei dem Verfahren der Aufnahmebildpixelparameter eine Intensität, einen Graustufenwert oder eine Helligkeit des Aufnahmebildpixels wiedergeben, und zwei Pixelparameter eines Pixels des Darstellungsbildes können eine Farbe und Helligkeit des Pixels in Abhängigkeit von Werten des Aufnahmebildpixelparameters des zugeordneten Pixels der dem Darstellungsbild zugeordneten Teilfolge von Aufnahmebildern wiedergeben. Dazu kann die Bildverarbeitungseinrichtung so ausgebildet sein, daß der Aufnahmebildpixelparameter eine Intensität, einen Graustufenwert oder eine Helligkeit des Aufnahmebildpixels wiedergibt, und zwei Pixelparameter eines Pixels des Darstellungsbildes können eine Farbe und Helligkeit des Pixels in Abhängigkeit von Werten des Aufnahmebildpixelparameters des zugeordneten Pixels der dem Darstellungsbild zugeordneten Teilfolge von Aufnahmebildern wiedergeben. Insbesondere können bei der Datenverarbeitungseinrichtung und dem Computerprogramm Aufnahmebildpixelparameter eine Intensität, einen Graustufenwert oder eine Helligkeit des Aufnahmebildpixels wiedergeben, und zwei Pixelparameter eines Pixels des Darstellungsbildes können eine Farbe und Helligkeit des Pixels in Abhängigkeit von Werten des Aufnahmebildpixelparameters des zugeordneten Pixels der dem Darstellungsbild zugeordneten Teilfolge von Aufnahmebildern wiedergeben, wozu entsprechende das Computerprogramm entsprechende Instruktionen enthält. Der Vorteil dieser Ausführungsform liegt darin, daß zur Darstellung nicht nur die Intensität bzw. der Grauwert des Darstellungsbildpixels, sondern gleichzeitig noch die Farbe verwendet werden kann, die Eigenschaften der dem jeweiligen Darstellungsbild zugeordneten Teilfolge der Aufnahmebilder wiedergeben kann. Die Farbe und die Helligkeit brauchen dabei nicht getrennt ermittelt zu werden. Vielmehr ist je nach verwendetem Farbmodell möglich, beide Parameter gleichzeitig zu verändern. Unter einer Einstellung der Farbe wird dabei auch die Einstellung einer Sättigung einer Farbe, beispielsweise im HSI-Farbmodell, verstanden.

Im allgemeinen können die Pixelparameter für ein Pixel des Darstellungsbildes eine beliebige Funktion wenigstens des Aufnahmebildpixelparameters des dem Darstellungsbildpixel entsprechenden Aufnahmebüdpixels der dem Darstellungsbild zugeordneten Teilbildfolge sein. Bei dem Verfahren, bei dem der Aufnahmebildpixelparameter eine Intensität, einen Graustufenwert oder eine Helligkeit des Aufnahmebildpixels wiedergibt, gibt jedoch vorzugsweise der Wert des wenigstens einen Pixelparameters eines Pixels des jeweiligen Darstellungsbildes das Maximum, das Minimum oder einen Mittelwert des Aufnahmebildpixelparameters des zugeordneten Pixels der zugeordneten Teilfolge der Aufnahmebilder wieder. Dazu ist die Bildverarbeitungseinrichtung vorzugsweise weiter so ausgebildet, daß der Aufnahmebildpixelparameter eine Intensität, einen Graustufenwert oder eine Helligkeit des Aufnahmebildpixels wiedergibt, und daß der Wert des wenigstens einen Pixelparameters eines Pixels des jeweiligen Darstellungsbildes das Maximum, das Minimum oder einen Mittelwert des Aufnahmebildpixelparameters des zugeordneten Pixels der zugeordneten Teilfolge der Aufnahmebilder wiedergibt. Insbesondere kann die Datenverarbeitungseinrichtung bzw. das Computerprogramm Instruktionen enthalten, so daß bei Ausführung der Instruktionen der Aufnahmebildpixelparameter eine Intensität, einen Graustufenwert oder eine Helligkeit des Aufnahmebildpixels wiedergibt, und daß der Wert eines Pixels des wenigstens einen Pixelparameters des jeweiligen Darstellungsbildes das Maximum, das Minimum oder einen Mittelwert des Aufnahmebildpixelparameters des zugeordneten Pixels der zugeordneten Teilfolge der Aufnahmebilder wiedergibt. Diese Ausführungsform hat den Vorteil, daß der Benutzer bei den ersten beiden Fällen auch nur sehr kurzzeitig, beispielsweise in nur einem Aufnahmebild auftretende Extrema der Intensität bzw. des Grauwerts oder der Helligkeit wahrnehmen kann, die er bei einer Echtzeitanzeige oder eine Anzeige nur beispielsweise eines vorgegebenen Bildes der Teilfolge nicht hätte erkennen können. Im Fall des Mittelwerts erhält der Benutzer in vorteilhafter Weise ein Darstellungsbild, in dem durch die Mittelwertbildung kurzzeitige Fluktuationen ausgeglichen sind. Dabei kann als Mittelwert auch ein gewichteter Mittelwert über die Teilfolge gebildet werden, wobei die Gewichte beliebig, vorzugsweise größer als Null, gewählt sein können.

Weiterhin kann bei dem Verfahren, bei dem der Aufnahmebildpixelparameter eine Intensität, einen Graustufenwert oder eine Helligkeit des Aufnahmebildpixels wiedergibt, der Wert des wenigstens einen Pixelparameters des Pixels des jeweiligen Darstellungsbildes die Schwankungsbreite der Werte des Aufnahmebildpixelparameters der dem Darstellungsbildpixel zugeordneten Pixel der dem Darstellungsbild zugeordneten Teilfolge vorhergehend erfaßter Aufnahmebilder wiedergeben. Die Bildverarbeitungseinrichtung ist dazu vorzugsweise weiter so ausgebildet, daß der Aufnahmebildpixelparameter eine Intensität, einen Graustufenwert oder eine Helligkeit des Aufnahmebildpixels wiedergibt, und der Wert des wenigstens eine Pixelparameters des Pixels des jeweiligen Darstellungsbildes die Schwankungsbreite der Werte des Aufnahmebildpixelparameters der dem Darstellungsbildpixel zugeordneten Pixel der dem Darstellungsbild zugeordneten Teilfolge bereits erfaßter Aufnahmebilder wiedergibt. Insbesondere kann die Datenverarbeitungseinrichtung oder das Computerprogramm Instruktionen enthalten, bei und/oder nach deren Ausführung der Aufnahmebildpixelparameter eine Intensität, einen Graustufenwert oder eine Helligkeit des Aufnahmebildpixels wiedergibt, und der Wert des wenigstens einen Pixelparameters des Pixels des jeweiligen Darstellungsbildes die Schwankungsbreite der Werte des Aufnahmebildpixelparameters der dem Darstellungsbildpixel zugeordneten Pixel der dem Darstellungsbild zugeordneten Teilfolge vorhergehend erfaßter Aufnahmebilder wiedergibt. Diese Ausführungsform hat den Vorteil, daß diese Weise in Echtzeit eine erste Auswertung der Werte des Aufnahmebildpixelparameters in Bezug auf deren Variation über die jeweilige Teilfolge, und damit vorzugsweise auch den entsprechenden Erfassungszeitraum, erfolgen kann. Der wenigstens eine Darstellungspixelparameter kann dabei insbesondere eine Farbe oder einen Graustufenwert beschreiben. Insbesondere können jedem Darstellungsbildpixel wenigstens zwei Pixelparameter so zugeordnet sein, daß beispielsweise der Wert des Minimums, Maximums oder des Mittelwerts als Helligkeit und der Wert für die Schwankungsbreite als Farbe, im HSI-Farbmodell beispielsweise als Farbton, des Pixels angezeigt werden kann. Die Schwankungsbreite kann dabei beispielsweise als Standardabweichung oder der Betrag der Differenz von Minimum und Maximum der Werte des Aufnahmebildpixelparameters der zugeordneten Teilfolge von Aufnahmebildern berechnet werden.

Der oder die Pixelparameter von Pixeln des Darstellungsbildes brauchen nicht allein von wenigstens einigen der Werte des Pixelparameters der entsprechenden Aufnahmebildpixel der dem Darstellungsbild zugeordneten Teilfolge der Aufnahmebilder abzuhängen. So kann bei einer bevorzugten Ausführungsform des Verfahren der Wert wenigstens eines Pixelparameters wenigstens eines Pixels des Darstellungsbildes in Abhängigkeit von dem zeitlichen Verlauf der Werte wenigstens eines Pixelparameters wenigstens eines Pixels der Aufnahmebilder der dem Darstellungsbild zugeordneten Teilfolge ermittelt werden. Die Bildverarbeitungseinrichtung ist dazu vorzugsweise weiter so ausgebildet ist, daß der Wert wenigstens eines Pixelparameters wenigstens eines Pixels des Darstellungsbildes in Abhängigkeit von dem zeitlichen Verlauf der Werte wenigstens eines Pixelparameters wenigstens eines Pixels der Aufnahmebilder der dem Darstellungsbild zugeordneten Teilfolge ermittelt wird. Insbesondere kann das Computerprogramm bzw. das Computerprogramm bei der Datenverarbeitungseinrichtung Instruktionen umfassen, bei deren Ausführung der Wert wenigstens eines Pixelparameters wenigstens eines Pixels des Darstellungsbildes in Abhängigkeit von dem zeitlichen Verlauf der Werte wenigstens eines Pixelparameters wenigstens eines Pixels der Aufnahmebilder der dem Darstellungsbild zugeordneten Teilfolge ermittelt wird. Dies hat den Vorteil, daß, vorzugsweise in Echtzeit, eine Auswertung der erfaßten Aufnahmebilder im Hinblick auf die Dynamik bzw. Änderungsgeschwindigkeit von Bereichen in den Aufnahmebildern erfolgen kann, wobei gleichzeitig die Ergebnisse in dem Darstellungsbild sichtbar gemacht werden. Insbesondere kann beispielsweise der Wert des wenigstens einen Pixelparameters so bestimmt werden, daß das entsprechende Pixel farblich markiert wird, wenn die Schwankungsbreite der Intensität des entsprechenden Pixels in der dem jeweiligen Darstellungsbild zugeordneten Teilfolge von Bildern einen vorgegebenen Schwellwert überschreitet.

Bei einer anderen bevorzugten Ausführungsform kann in einem Darstellungsbild eine Farbkodierung der Meßzeit für Aufnahmebilder innerhalb einer dem Darstellungsbild zugeordneten Teilfolge erfolgen. So kann bei dem Verfahren wenigstens einem Pixel der Aufnahmebilder einer Teilfolge als Pixelparameter jeweils eine Farbe zugeordnet werden, die der Position des Aufnahmebildes in der Teilfolge bzw. der Erfassungszeit entspricht, und in Abhängigkeit von den Werten des Pixelparameters ein Wert eines eine Farbe wiedergebender Pixelparameters eines dem Aufnahmebildpixel zugeordneten Darstellungsbildpixels ermittelt werden. Die Bildverarbeitungseinrichtung kann dazu weiter so ausgebildet sein, daß wenigstens einem Pixel der Aufnahmebilder einer Teilfolge als Pixelparameter jeweils eine Farbe zugeordnet wird, die der Position des Aufnahmebildes in der Teilfolge bzw. der Erfassungszeit entspricht, und in Abhängigkeit von den Werten des Pixelparameters ein Wert eines eine Farbe wiedergebender Pixelparameters eines dem Aufnahmebildpixel zugeordneten Darstellungsbildpixels ermittelt wird. Insbesondere kann das Computerprogramm bzw. das Computerprogramm in der Datenverarbeitungseinrichtung Instruktionen umfassen, bei deren Ausführung der Prozessor wenigstens einem Pixel der Aufnahmebilder einer Teilfolge als Pixelparameter jeweils eine Farbe zuordnet, die der Position des Aufnahmebildes in der Teilfolge bzw. der Erfassungszeit entspricht, und in Abhängigkeit von den Werten des Pixelparameters ein Wert eines eine Farbe wiedergebender Pixelparameters eines dem Aufnahmebildpixel zugeordneten Darstellungsbildpixels ermittelt. Diese Ausführungsform hat den Vorteil; daß die Aufnahmebilder einer Teilfolge, vorzugsweise in Echtzeit, so ausgewertet werden können, daß ein Benutzer trotz der geringeren Bildfrequenz der Darstellungsbilder zumindest einen Eindruck von der zeitlichen Entwicklung der Aufnahmebilder bzw. einer betrachteten Probe erhalten kann.

Eine weitere Auswertungsmöglichkeit bietet eine Ausführungsform der Erfindung, bei der Pixel nachleuchten. Bei dem Verfahren kann wenigstens einem Pixel des Darstellungsbildes als Pixelparameter das Maximum der Helligkeiten der dem Pixel zugeordneten Pixel der zugeordneten Teilfolge von vorhergehenden Aufnahmebilderri zugeordnet werden, dann der Helligkeitswert für eine vorgegebenen Zeit beibehalten und danach mit einer vorgegebenen Abfallgeschwindigkeit reduziert werden, wobei der Helligkeitswert des Pixels des Darstellungsbildes neu gesetzt wird, wenn ein Helligkeitswert des zugeordneten Pixels in einem aktuellen Aufnahmebild größer als der aktuelle Helligkeitswert des Pixels in dem Darstellungsbild ist. Die Bildverarbeitungseinrichtung ist dazu vorzugsweise weiter so ausgebildet ist, daß wenigstens einem Pixel des Darstellungsbildes als Pixelparameter das Maximum der Helligkeiten der dem Pixel zugeordneten Pixel der zugeordneten Teilfolge von vorhergehenden Aufnahmebildern zugeordnet wird, dann der Helligkeitswert für eine vorgegebene Zeit beibehalten und danach mit einer vorgegebenen Abfallgeschwindigkeit reduziert wird, wobei der Helligkeitswert des Pixels des Darstellungsbildes neu gesetzt wird, wenn ein Helligkeitswert des zugeordneten Pixels in einem aktuellen Aufnahmebild größer als der aktuelle Helligkeitswert des Pixels in dem Darstellungsbild ist. Das Computerprogramm, insbesondere das Computerprogramm in der Datenverarbeitungseinrichtung kann dazu Instruktionen umfassen, bei deren Ausführung der Prozessor wenigstens einem Pixel des Darstellungsbildes als Pixelparameter das Maximum der Helligkeiten der dem Pixel zugeordneten Pixel der zugeordneten Teilfolge von vorhergehenden Aufnahmebildern zuordnet, dann der Helligkeitswert für eine vorgegebenen Zeit beibehält und danach mit einer vorgegebenen Abfallgeschwindigkeit reduziert, wobei er den Helligkeitswert des Pixels des Darstellungsbildes neu setzt, wenn ein Helligkeitswert des zugeordneten Pixels in einem aktuellen Aufnahmebild größer als der aktuelle Helligkeitswert des Pixels in dem Darstellungsbild ist. Insbesondere kann die vorgegebene Zeit größer als wenigstens zwei Zeitabstände zwischen aufeinanderfolgenden Darstellungsbildern sein. Diese Ausführungsform hat den Vorteil, daß intensitätsstarke Bereiche in dem Aufnahmebild leichter identifiziert werden können.

Grundsätzlich kann die Bildverarbeitungseinrichtung unabhängig von einer Bilddatenerfassungs- bzw. Aufnahmeeinrichtung zur Aufnahme der Aufnahmebilder sein. Gegenstand der Erfindung ist jedoch auch eine Abbildungsvorrichtung mit einer Bilddatenerfassungseinrichtung, einer Abbildungsoptik zur Abbildung eines Objekts auf die Bilddatenerfassungseinrichtung und einer erfindungsgemäßen Bildverarbeitungseinrichtung, bei der die Erfassungsschnittstelle mit der Bilddatenerfassungseinrichtung verbunden ist. Die Integration der Bildverarbeitungseinrichtung in die Abbildungseinrichtung hat den Vorteil, daß eine schnelle Datenübertragung zu der Bildverarbeitungseinrichtung möglich ist. Darüber hinaus kann eine kompakte Abbildungsvorrichtung realisiert werden, bei der die Bilddatenerfassungs- bzw. Aufnahmeeinrichtung und die Bildverarbeitungseinrichtung in einem Gehäuse angeordnet sind.

Grundsätzlich kann die Abbildungsvorrichtung beliebig ausgebildet sein. Vorzugsweise ist die Abbildungsvorrichtung jedoch als Mikroskop, insbesondere Laser-Scanning-Mikroskop, ausgebildet. Dazu ist insbesondere die Abbildungsoptik zur vergrößernden Abbildung eines zu betrachtenden Objekts ausgebildet.

Eine in vorteilhafter Weise besonders schnelle Erfassung von Aufnahmebilder ist bei einer Abbildungsvorrichtung möglich, die als Laser-Scanning-Mikroskop ausgebildet ist, bei dem die Bilddatenerfassungseinrichtung gleichzeitig einen wenigstens linienförmigen Bereich oder eine Gruppe von Punkten einer Probe erfaßt.

Die Erfindung wird im folgenden beispielhaft anhand der Zeichnungen noch weiter erläutert. Es zeigen:

Fig. 1	eine schematische Darstellung eines Laser-Scanning-Mikroskops, und

Fig. 2	eine schematische Darstellung eines Ausschnitts aus einer mit dem Mikroskop in Fig. 1 erfaßten Aufnahmebildfolge und entsprechender Darstellungsbilder.

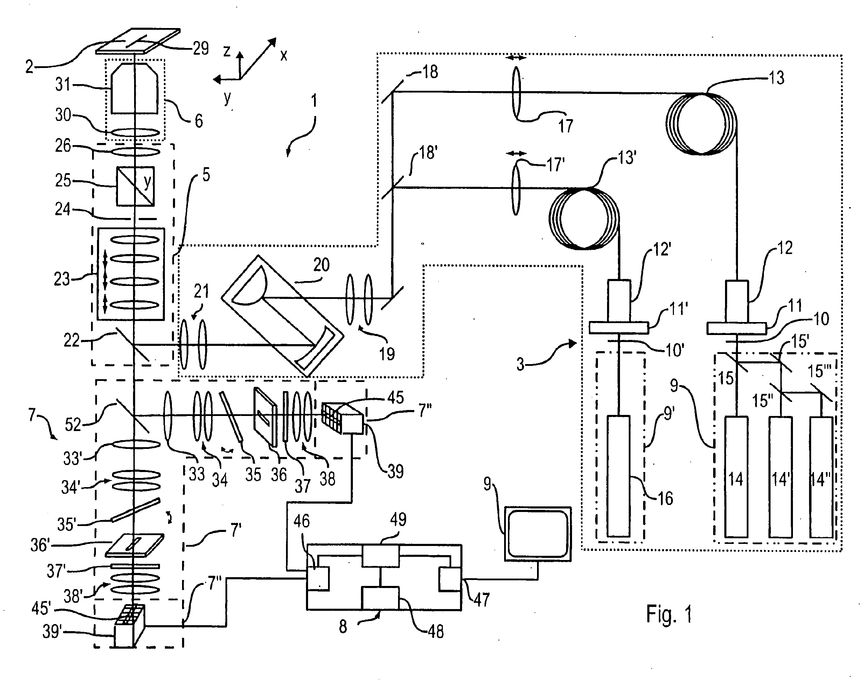

In Fig. 1 verfügt eine Abbildungsvorrichtung nach einer ersten bevorzugten Ausführungsform der Erfindung in Form eines Laser-Scanning-Mikroskops 1, das zur Untersuchung eines Objekts bzw. einer Probe 2 dient, über ein Beleuchtungsmodul 3 zur Abgabe wenigstens eines kollimierten Beleuchtungsstrahls 4 mit einem vorgegebenen Strahlprofil, ein Ablenk- bzw. Scanmodul 5 zur gesteuerten Ablenkung des Beleuchtungsstrahls 4, eine Mikroskopoptik 6 und ein Detektionsmodul 7 mit einer Detektionsoptik 7' und einer Aufnahmebilddatenerfassungseinrichtung 7" zur Erfassung wenigstens von Teilbildern der Probe 2, die von der durch die Mikroskopoptik 6 und die Detektionsoptik 7' gebildete Abbildungsoptik auf die Aufnahmebilddatenerfassungseinrichtung 7" abgebildet werden. Eine Bildverarbeitungseinrichtung 8 nach einer ersten bevorzugten Ausführungsform der Erfindung, die auch als Steuer- und Auswerteinrichtung dient, ist mit der Aufnahmebilddatenerfassungseinrichtung 7" und einer Anzeigeeinrichtung 9 in Form eines Farbmonitors verbunden.

Das Laser-Scanning-Mikroskop 1 ist zur Untersuchung der Probe in verschiedenen wählbaren Wellenlängenbereichen zweikanalig ausgebildet.

Bei diesem Laser-Scanning-Mikroskop 1 erfolgt die Abbildung der Probe 2 dadurch, daß diese mit dem Beleuchtungsstrahl 4 mit einem wenigstens nahe der Probe 2 linienförmigern Profil abgetastet wird.

Das Beleuchtungsmodul 3 dient zur Abgabe des kollimierten Beleuchtungsstrahls 4 mit einem vorgegebenen Strahlprofil, das linienförmig auf die Probe fokussierbar ist. Vorzugsweise hat die optische Beleuchtungsstrahlung Wellenlängen, die in typischen Proben Fluoreszenz auslösen kann. Das Beleuchtungsmodul 3 ist zur wahlweisen Abgabe von Einzel- und Multiwellenlängenlaserstrahlung ausgebildet. Hierzu verfügt es über zwei Lasereinheiten 9 und 9', denen jeweils ein Lichtventil 10 bzw. 10' und ein Abschwächer 11 bzw. 11' nachgeordnet sind und deren Strahlung nach Passieren des jeweiligen Lichtventils 10 bzw. 10' und des jeweiligen Abschwächers 11 bzw. 11' über Koppeleinrichtungen 12 bzw. 12' in Lichtleitfasern 13 bzw. 13' eingekoppelt werden. Die von der Bildverarbeitungseinrichtung 8 als Steuereinrichtung angesteuerten Lichtventile 10 bzw. 10' sind jeweils als steuerbare Strahlablenker ausgebildet, mittels derer eine Strahlabschaltung bewirkt werden kann, ohne die jeweilige Lasereinheiten 9 bzw. 9' abschalten zu müssen. Im Ausführungsbeispiel sind die Lichtventile 10 bzw. 10' durch AOTF (Acousto Optical Tunable Filter) realisiert, die je nach Ansteuerung die Strahlung der jeweiligen Lasereinheit dem nachgeordneten Abschwächer zuleitet oder zur Strahlabschaltung den von der jeweiligen Lasereinheit abgegebenen Laserstrahl auf eine nicht dargestellt Lichtfalle ablenkt.

In diesem Ausführungsbeispiel verfügt die Lasereinheit 9 über drei Laser 14, 14' und 14", die jeweils gleichzeitig betrieben werden und Laserstrahlen jeweils unterschiedlicher Wellenlängenbereiche abgeben. Die Laserstrahlen werden über strahlablenkenden Elemente 15, 15', 15" und 15''' zu einem einzigen Laserstrahl überlagert, der dann auf das Lichtventil 10 fällt.

Die Lasereinheit 9' dagegen verfügt über nur einen Laser 16, der einen Laserstrahl in einem Wellenlängenbereich abgibt, der sich von den Wellenlängenbereichen der Laserstrahlen der Laser 14, 14' und 14" unterscheidet.

Die aus den Lichtleitfasern 13 bzw. 13' austretende Strahlung wird über Kollimationsoptiken 17 bzw. 17' in einen Unendlichstrahlengang kollimiert und durch Ablenkung an Strahlvereinigungsspiegeln 18 bzw. 18' zu dem Beleuchtungslaserstrahl 4 überlagert. Die Kollimation erfolgt jeweils vorteilhaft mit einer einzelnen Linse, die durch Verschiebung entlang der optischen Achse unter Steuerung durch die Ansteuereinheit eine Fokussierungsfunktion hat, indem der Abstand zwischen Kollimationsoptiken 17', 17' und dem Ende der jeweiligen Lichtleitfaser 13 bzw. 13' veränderbar ist.

Werden die Lasereinheiten 9 und 9' gleichzeitig betrieben, kann so ein kollimierter Beleuchtungsstrahl 4 erzeugt werden, der je nach Ansteuerung der Lichtventile unterschiedliche Wellenlängen bzw. Wellenlängenbereiche aufweist.

Den Strahlvereinigungsspiegeln 18 bzw. 18' ist ein Spiegel nachgeordnet, der den Beleuchtungslaserstrahl auf eine im Beleuchtungsstrahlengang diesem nachgeordnete Strahlformungseinheit 19, 20, 21 des Beleuchtungsmoduls ablenkt. Die Strahlformungseinheit 19 bis 21 umfaßt ein Zylinderteleskop 19, eine asphärische Optik 20 und ein Zylinderoptik 21. Diese optischen Elemente sind so gewählt, daß nach der Umformung ein Strahl vorliegt, der in einer Strahlprofilebene ein im wesentlichen rechteckiges Feld ausleuchtet, wobei die Intensitätsverteilung zur Erzeugung eines linienförmigen Fokus geeignet ist. Die Intensitätsverteilung entlang der Feldlängsachse ist vorzugsweise nicht gaußförmig, sondern kastenförmig. Die Linie ist dabei in der Figur 1 senkrecht zur Zeichnungsebene, d.h. parallel zu der x-Richtung eines orthogonal zu der Zeichenebene ausgerichteten kartesischen x-y-Koordinatensystems ausgerichtet.

Der von dem Beleuchtungsmodul 3 abgegebene Beleuchtungsstrahl 4 tritt in das Ablenkmodul 5 ein, das entlang des Beleuchtungsstrahlengangs einen Hauptfarbteiler 22 zur Ablenkung des Beleuchtungsstrahls 4, eine Zoomoptik 23, ein Blende 24 einen mit der Bildverarbeitungseinrichtung 8 zur Ansteuerung verbundenen Scanner 25 zur gesteuerten Ablenkung des Beleuchtungsstrahls in einer zu der x-Richtung orthogonalen y-Richtung und eine Scanoptik 26 umfaßt.

Der Hauptfarbteiler 22 dient dazu, zum einen die Beleuchtungsstrahlung 4 auf den Scanner 25 zu lenken und zum anderen von der Probe 2 ausgehende Detektionsstrahlung mit möglichst geringeren Verlusten durchzulassen und von der Beleuchtungsstrahlung zu trennen. Der Begriff "Farbteiler" umfaßt dabei spektral und nichtspektral wirkende Teiler bzw. Teilersysteme. In diesem Ausführungsbeispiel wird eine Ausführungsform als spektral-neutraler Teilerspiegel gemäß der DE 102 57 237 A1 verwendet.

Der Scanner 25 lenkt den Beleuchtungsstrahl in y-Richtung, d.h. einer Richtung orthogonal zu der Längsrichtung des rechteckigen Strahlprofils bzw. der x-Richtung ab, wonach er durch die Scanoptik 26 sowie die Mikroskopoptik 6 in einen linienförmigen Fokus 29 in einer parallel zu der x-y-Ebene verlaufenden Schicht in der Probe 2 gebündelt wird. Die Schicht ist durch Bewegung eines in Figur 1 nicht gezeigten Probentischs in einer zu der x- und y-Richtung orthogonalen z-Richtung auswählbar, der durch einen von der Bildverarbeitungseinrichtung als Steuereinrichtung gesteuerten ebenfalls nicht gezeigten Antrieb bewegbar ist. Der Scanner 25 besitzt zur Bewegung des Beleuchtungsstrahls wenigstens einen von der Bildverarbeitungseinrichtung 8 angesteuerten Scanantrieb und einen mittels des Scanantriebs um eine zu der x-Achse parallelen Drehachse dreh- oder schwenkbaren Spiegel.

Die Mikroskopoptik 6 umfaßt in bekannter Weise eine Tubuslinse 30 sowie ein Objektiv 31.

Von dem Bereich des Fokus 29 ausgehende Detektionsstrahlung, beispielsweise durch die Beleuchtungsstrahlung angeregte Fluoreszenzstrahlung, gelangt über das Objektiv 31 und die Tubuslinse 30 der Mikroskopoptik 6 und die Scanoptik 26 zurück zum Scanner 25, so daß in Rückrichtung bzw. Richtung der Detektionsstrahlung nach dem Scanner 25 wieder ein ruhender Detektionsstrahl vorliegt. Man spricht deshalb auch davon, daß der Scanner 25 die DetektionsStrahlung "descannt".

Der Hauptfarbteiler 22 läßt die in anderen Wellenlängenbereichen als die Beleuchtungsstrahlung liegende Detektionsstrahlung passieren, so daß sie in das Detektionsmodul eintreten kann wo sie detektiert wird.

Das Detektionsmodul ist in diesem Ausführungsbeispiel zweikanalig aufgebaut. Die Detektionsoptik 7' umfaßt einen im Detektionsstrahlengang angeordneten Nebenfarbteiler 32, der die in ihn eintretende Detektionsstrahlung in zwei Teildetektionsstrahlenbündel in unterschiedlichen Wellenlängenbereichen bzw. zwei spektrale Kanäle aufspaltet, und zwei bis auf ihre spektralen Eigenschaften gleich aufgebauten Arme, in die die beiden durch den Nebenfarbteiler 32 gebildeten Teildetektionsstrahlenbündel eingekoppelt werden. Es wird daher der Aufbau nur einer der Arme beschrieben, der andere ergibt sich entsprechend, wobei für sich entsprechende Komponenten die gleichen Bezugszeichen, aber mit einem Strich zur Bezeichnung in Figur 1 verwendet werden.

In jedem der Arme sind entlang eines Strahlengangs eine erste sphärische Optik 33, ein erstes Zylinderteleskop 34, eine um zwei zueinander und zu dem Strahlengang orthogonale Achsen drehbare planparallele Platte 35, eine feine Schlitzblende 36, ein Blockfilter 37, ein zweites Zylinderteleskop 38 als Teile der Detektionsoptik und schließlich ein CCD-Zeilendetektor 39 als Teil der Aufnahmebilderfassungseinrichtung 7 angeordnet.

Die sphärische Optik 33 dient zur Abbildung des Fokusbereichs der Probe 2 auf den CCD-Zeilendetektor 39.

Die Schlitzblende 36 hat eine linienförmige Blendenöffnung, die so angeordnet ist, daß bei entsprechender Justierung der linienförmige Fokusbereich in der Probe 2 in die Blendenöffnung abgebildet wird, so daß eine in einer Richtung orthogonal zu der Längsrichtung des in einer Richtung gestreckten Strahlprofils der Detektionsstrahlung, die der Richtung des Fokus 29 entspricht, konfokale Abbildung erzielt wird, in der dazu orthogonalen Richtung jedoch eine normale Abbildung. Hierzu dienen auch die beiden Zylinderteleskope 34 und 38, deren Zylinderlinsen entsprechend angeordnet sind.

Die Breite der Blendenöffnung der Schlitzblende 36 bestimmt in bekannter Weise die Tiefenschärfe, mit der die Detektionsstrahlung detektiert werden kann, und damit die Dicke der Schicht in der Probe 2, aus der Detektionsstrahlung detektiert wird.

Die planparallele Platte 35 dient zur Justierung des Detektionsstrahlenbündels auf die Öffnung der Schlitzblende 36 in zwei Richtungen orthogonal zu dem Strahlengang durch Verkippen der Platte 35. Insbesondere kann mittels dieser Platte eine Einstellung der Lage der Bilder des Fokusbereichs auf den Zeilendetektoren 39 und 39' erfolgen, so daß gleiche Bereiche auf sich entsprechende Detektorelemente abgebildet werden können.

Der Schlitzblende 36 ist noch das optionale Blockfilter 37 nachgeordnet, das unerwünschte, in das Detektormodul 7 gelangte Beleuchtungsstrahlung abblockt.

Die derart abseparierte, aus einem bestimmten Tiefenabschnitt stammende, zeilenförmig aufgefächerte Strahlung wird dann von dem Zeilendetektor 39 erfaßt, dessen Signale von der Bilddatenerfassungseinrichtung 8 erfaßt werden.

Das Beleuchtungsmodul 3 zusammen mit der Asphäreneinheit 20 kann zur gleichmäßigen Füllung einer Pupille zwischen einer Tubuslinse und einem Objektiv dienen. Damit kann die optische Auflösung des Objektivs voll ausgeschöpft werden.

Der Zeilendetektor 39, im Beispiel einen CCD-Zeüendetektor, verfügt über eine Zeile von N (N ganze Zahl größer als 1) Detektorelementen 45 für die Detektionsstrahlung. Die Zeile ist parallel zu der Längsrichtung der schlitzförmigen Öffnung der Schlitzblende 36 ausgerichtet. Da der Fokus 29 entlang seiner Längsrichtung auf den Zeilendetektor 39 abgebildet wird, werden parallel Intensitäten aus entlang der Längsrichtung des Fokus 29 nebeneinanderliegenden Abschnitten eines Bereichs der Probe 2 im Fokus 29 auf entsprechende Detektorelemente 45 des Zeilendetektors 39 abgebildet, so daß in dieser x-Richtung eine ortsaufgelöste Abbildung des Fokus 29 bzw. genauer des entsprechenden Bereichs der Probe 2 im Fokus 29 erfolgt. Der Zeilendetektor 39 gibt entsprechend der von den Detektorelementen 45 lokal aufgelöst erfaßten Intensitäten Bilddatenerfassungssignale ab.

Die Aufnahmebilddatenerfassungseinrichtung 7" und darin insbesondere die Zeilendetektoren 39 und 39' sind über eine Signalverbindung mit der auch als Steuer- und Auswerteeinrichtung dienenden Bildverarbeitungseinrichtung 8 verbunden, die zum einen der Ansteuerung des Ablenkmoduls 5 und zum anderen zur Auswertung der Signale des Aufnahmebilddatenerfassungseinrichtung 7", genauer der Bilddatenerfassungssignale der Zeilendetektoren 39 und 39', unter Bildung von Darstellungsbildern, die auf einer mit der Bildverarbeitungseinrichtung 8 über eine Signalverbindung verbundene Anzeigeeinrichtung 9, im Beispiel ein Farbmonitor, dient.

Die Bildverarbeitungseinrichtung 8, die als Datenverarbeitungseinrichtung ausgebildet ist, verfügt über eine Erfassungsschnittstelle 46 zu der Aufnahmebilddatenerfassungseinrichtung 7" bzw. deren Zeilendetektoren 39 und 39', eine mit der Anzeigeeinrichtung 9 verbundenen Graphikschnittstelle 47, einen Speicher 48, in dem Daten und Instruktionen eines Computerprogramms gespeichert sind, und einen mit den Schnittstellen 46 und 47 verbundenen Mikroprozessor 49, der bei Ausführung der Instruktionen das im Folgenden beschriebene Verfahren ausführt. Statt eines Mikroprozessors kann auch ein digitaler Signalprozessor oder eine Kombination von Prozessoren verwendet werden.

Weiterhin sind in der Bildverarbeitungseinrichtung 8 Einrichtungen zur Steuerung des Scanners 25 und Synchronisation der Erfassung von Bildern der Zeilendetektoren 39 und 39' mit der Stellung des Scanners 25 vorgesehen, die teilweise durch den Mikroprozessor 49 realisiert sein können und daneben noch weitere, dem Fachmann bekannte, in Fig. 1 nicht gezeigte Komponenten umfassen können.

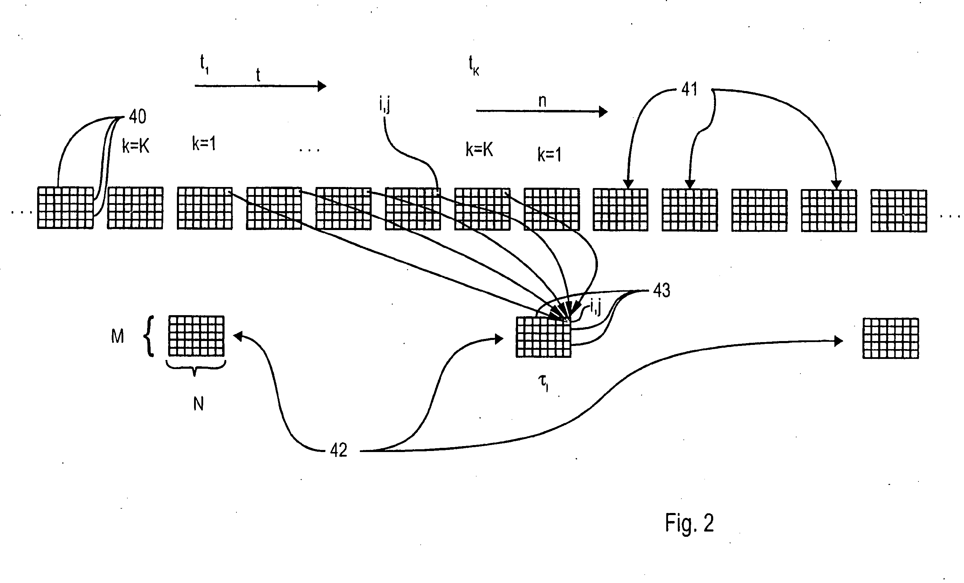

Aufnahmebilder einer Schicht in der Probe 2, deren Schichtdicke durch die Breite der Schlitzöffnung der Blenden und die Eigenschaften der Abbildungsoptik 6 gegeben ist, werden durch eine rechteckige Anordnung von Bildelementen bzw. Pixeln 40 wiedergegeben. Die Eigenschaften der Pixel ergeben sich dabei aus den Aufnahmebilddaten von derselben Stelle der Probe entsprechenden Detektorelementen 45 bzw. 45' der Zeilendetektoren 39 und 39', soweit beide ausgewertet werden, sonst nur den Detektorelementen 45 bzw. 45' einer der Zeilendetektoren 39 oder 39'. Derselben Stelle der Probe 2 entsprechenden Detektorelemente werden im folgenden als einander zugeordnet bezeichnet. Einige Aufnahmebilder 41 einer Folge von Aufnahmebildern sind in Fig. 2 gezeigt, wobei der Übersichtlichkeit halber die Anzahl der Pixel gegenüber der tatsächlichen Anzahl reduziert ist. Jedem Pixel eines jeweiligen Aufnahmebildes 41 ist als Pixelparameter, der neben der Lage des Pixels die Eigenschaften des Aufnahmebildes wiedergibt, eine Helligkeit, d.h. ein Wert einer die Intensität bzw. Energie der Detektionsstrahlung wiedergebenden Größe, zugeordnet. Die Darstellungsbilder 42 werden ebenfalls durch eine rechteckige Anordnung von Bildelementen bzw. Pixeln 43 wiedergegeben, im Ausführungsbeispiel die in Anzahl und Anordnung denen der Aufnahmebilder entsprechen, was jedoch nicht generell der Fall zu sein braucht.

Die Erfassung eines Aufnahmebildes erfolgt folgendermaßen: Das Beleuchtungsmodul 3 gibt den Beleuchtungsstrahl 4 ab, der mittels des Ablenkmoduls 5 in y-Richtung geschwenkt und in eine Schicht der Probe 2 auf den linienförmigen Fokus 29 fokussiert wird. Von dem Fokus 29 ausgehende Detektionsstrahlung 50 wird durch die Abbildungsoptik, d.h. die Mikroskopoptik 6 und die Detektionsoptik 7' auf die Aufnahmebilddatenerfassungseinrichtung 7", genauer deren Zeilendetektoren 39 und 39', in einer Richtung quer zur Zeile konfokal abgebildet.

Die dabei gebildeten Detektionssignale der Zeilendetektoren 39 und 39' werden der Bildverarbeitungseinrichtung 8 als Aufnahmebilddaten zugeführt bzw. von dieser ausgelesen.

In einer vorgegebenen Zeitfolge werden Signale der Zeilendetektoren 39 und 39' über die Schnittstelle 46 erfaßt und in dem Speicher 48 der Bildverarbeitungseinrichtung 8 gespeichert. Die Signale geben für jedes Detektorelement 45 bzw. das jeweilige Detektorelement 45' des Zeilendetektors 39 bzw. 39' die Energie und damit die Intensität der Detektionsstrahlung wieder, die von dem jeweiligen Detektorelement 45 bzw. 45' erfaßt wurde. Jedem Detektorelement 45 und dem diesem zugeordneten Detektorelement 45' ist ein entsprechendes Pixel einer Zeile in dem jeweiligen Aufnahmebild zugeordnet, wobei die erfaßte Intensität bzw. Energie dem Aufnahmebildpixelparameter des Pixels als Wert zugewiesen wird.

Bei einer Bewegung des Fokus 29 von einer in Fig. 1 oberen Lage in eine in Fig. 1 untere Lage wird so eine Folge von Zeilen von Pixeln bzw. genauer Werten von Pixelparametern der Aufnahmebildpixel erfaßt, die untereinander angeordnet ein Aufnahmebild der Probe ergeben. Dies ist in Fig. 2 veranschaulicht, in der die Pixel mit Indizes i,j gekennzeichnet sind. Der Index j=0, ..., N-1 bezeichnet dabei die Position eines Pixels entlang der Zeile i, die in der Lage i des Fokus 29 d.h. zu einer entsprechenden Zeit, aufgenommen wurde. Die Position j entspricht der Position des entsprechenden Detektorelements 45 in dem Zeilendetektor 39. Die Anzahl M der Zeilen des Aufnahmebildes ist durch die Ansteuerung des Ablenk- bzw. Scan-Moduls 5 gegeben, die wiederum durch die gewünschte Höhe des Bildes in y-Richtung bestimmt ist.

Die Erfassung der Aufnahmebilder erfolgt dabei in konstanten Zeitabständen, so daß eine zeitliche Folge von Aufnahmebildern $E_n$ erhalten und gespeichert wird, wobei n die Ordinalzahl des Aufnahmebildes in der Folge ist. Die Frequenz, mit der die Aufnahmebilder erfaßt werden, ist im Beispiel so hoch, daß das menschliche Auge aufeinanderfolgende Aufnahmebilder bei einer Darstellung auf der Anzeigeeinrichtung 9 nicht unterscheiden könnte, selbst wenn eine Darstellung der Aufnahmebilder in Echtzeit möglich wäre.

In dem Speicher 48, genauer einem nichtflüchtigen Teil des Speichers 48, sind Instruktionen eines Computerprogramms gespeichert. Alternativ könnte das Programm auch auf einem Datenträger wie einer CD gespeichert sein, die über ein nicht gezeigtes mit dem Mikroprozessor 49 verbundenes CD-Laufwerk gelesen werden kann. Der Mikroprozessor 49 führt bei Abarbeitung der Instruktionen folgendes Verfahren aus:

Die Bildverärbeitungseinrichtung 8, d.h. der Mikroprozessor 49, erfaßt in Echtzeit über die Erfassungsschnittstelle 46 eine zeitliche Folge von Aufnahmebildern, d.h. genauer Pixelparameterwerte der das erfaßte Aufnahmebild wiedergebenden Pixel, und speichert diese in dem Speicher 48 zwischen. Im Ausführungsbeispiel werden die Aufnahmebilder mit einer fest vorgegebenen Frequenz erfaßt.

Aus einer Teilfolge von K (K vorgegebene natürliche Zahl größer als 0) unmittelbar aufeinanderfolgend erfaßten Aufnahmebildern 41, d.h. den entsprechenden Pixelparameterwerten, ermittelt der Mikroprozessor 49 unmittelbar nach Erfassung des letzten Aufnahmebildes der Teilfolgen ein der Teilfolge zugeordnetes Darstellungsbild 42, das sofort angezeigt wird. Es wird die nächste Teilfolge von Aufnahmebildern erfaßt und das nächste Darstellungsbild aus dieser Teilfolge ermittelt. Daher entsteht aus der über eine Zeitspanne T erfaßte Folge der Aufnahmebilder eine Folge von Darstellungsbildern über die gleiche Zeitspanne, die weniger Bilder enthält, als die Folge der Aufnahmebilder.

Die Darstellungsbilder 42 werden ebenfalls durch Pixel 43 wiedergegeben, wobei im Ausführungsbeispiel die Anzahl und Anordnung der Pixel der Darstellungsbilder 42 der der Aufnahmebilder 41 entspricht, so daß einen Ein-zu-Eins-Korrespondenz zwischen an gleichen Stellen innerhalb eines Aufnahme- und eines Darstellungsbildes angeordneten Pixeln besteht (vgl. Pfeile in Fig. 2). Es ist in anderen Ausführungsbeispielen denkbar, daß die Darstellungsbilder in ihrer Auflösung reduziert sind und weniger Pixel als die Aufnahmebilder umfassen, so daß einem Pixel eines Darstellungsbildes mehrere Pixel eines Aufnahmebildes zugeordnet sind.

Bezeichnen das Zahlenpaar (i,j) die Lage eines Pixels in den Aufnahme- bzw. Darstellungsbildern, $t_k$, k=1, ..., K die Erfassungszeitpunkte bzw. Ordinalzahlen der Aufnahmebilder in der jeweiligen Teilfolge, $\tau_l$ den Zeitpunkt bzw. die Ordinalzahl des der Teilfolge zugeordneten Darstellungsbildes in der Folge der Darstellungsbilder und $e(i,j,t_k)$ sowie $d(i,j,\tau_l)$ die entsprechenden Pixelparameter des Pixels in dem jeweiligen Aufnahme- bzw. Darstellungsbild, so ist allgemein. $d(i,j,\tau_l)$ eine Funktion F wenigstens der Pixelparameter der Pixel der der Zeit $\tau_l$, zugeordneten Teilfolge von Aufnahmebildern:

$$d(i,j,\tau_l) = F(e(i,j,t_1),...,e(i,j,t_K)).$$

Die Zahl K kann beispielsweise so gewählt sein, daß die Darstellungsbilder mit einer Frequenz erzeugt werden, die nach Darstellung auf der Anzeigeeinrichtung 9 eine Wahrnehmung durch das menschliche Auge zuläßt, beispielsweise mit einer Frequenz kleiner als 30 Hz.

Der Prozessor 49 gibt die ermittelten Darstellungsbilder dann über die Graphikschnittstelle 47 an die Anzeigeeinrichtung 9 aus, wo sie angezeigt werden.

In diesem ersten Ausführungsbeispiel ist der Pixelparameter $d(i,i,-\tau_l)$ der Grauwert des Pixels des monochromen Darstellungsbildes. Diesem wird für die entsprechende Teilfolge der Aufnahmebilder ein von dem Maximum der Pixelparameterwerte des entsprechenden Pixels der Aufnahmebilder abhängender, beispielsweise zu diesem proportionaler Wert zugeordnet:

$$d(i,j,\tau_l) = F_1\big(e(i,j,t_1),...,e(i,j,t_K)\big) = MAX\big(e(i,j,t_1),...,e(i,j,t_K)\big).$$

Die Zeit $\tau_l$ liegt dabei vorzugsweise innerhalb des Bereichs der Erfassungszeiten der Teilfolge von Aufnahmebildern, die unmittelbar auf die zu den Zeiten $t_1$, bis $t_K$ erfaßten Teilfolge folgt, so daß eine Online-Betrachtung möglich ist. Da die Aufnahmebilder mit einer fest vorgegebenen Frequenz erfaßt werden, werden auch die Darstellungsbilder mit einer festen Frequenz ermittelt, die um den Faktor 1/K gegenüber der Erfassungsfrequenz für die Aufnahmebilddaten reduziert ist.

Eine zweite und eine dritte bevorzugte Ausführungsform der Erfindung unterscheidet sich von dem ersten Ausführungsbeispiel dadurch, daß das Computerprogramm so geändert ist, daß statt des Maximums der Teilfolge das Minimum der Aufnahmebildpixelparameterwerte über die Teilfolge:

$$d(i,j,\tau_l) = F_2\big(e(i,j,t_1),...,e(i,j,t_K)\big) = MIN\big(e(i,j,t_1),...,e(i,j,t_K)\big)$$

bzw. ein Mittelwert über die Teilfolge

$$d(i,j,\tau_l) = F_3\big(e(i,j,t_1),...,e(i,j,t_K)\big) = \frac{1}{K}\sum_{k=1}^{K} e(i,j,t_k)$$

als Wert des Pixelparameters des Pixels des Darstellungsbildes verwendet wird.

Eine vierte bevorzugte Ausführungsform der Erfindung unterscheidet sich von dem ersten Ausführungsbeispiel dadurch, daß das Computerprogramm so geändert ist, daß statt des Maximums der Teilfolge eine normierte Schwankungsbreite der Werte des Pixelparameters des Aufnahmebildpixels verwendet wird, die hier durch die Standardabweichung gegeben ist:

$$d(i,j,\tau_l) = F_3\big(e(i,j,t_1),...,e(i,j,t_K)\big) = \frac{1}{K-1}\sum_{k'=1}^{K}\left( e(i,j,t_{k'}) - \frac{1}{K}\sum_{k=1}^{K} e(i,j,t_k)\right)^2$$

Das resultierende Darstellungsbild läßt damit für einen Betrachter einfach erkennen, welche Bereiche der Probenschicht in einer Zeitspanne zwischen zwei aufeinanderfolgenden Darstellungsbildern bzw. innerhalb der Teilfolge der Aufnahmebilder die stärksten Intensitätsänderungen aufgewiesen haben. Diese Information über sehr schnelle Vorgänge wäre bei einer direkten Betrachtung der Aufnahmebilder für einen Betrachter nicht ohne weiteres erkennbar.

Alternativ kann als Maß für die Schwankungsbreite auch die Differenz zwischen Maximum und Minimum des Pixelparameters über die Teilfolge verwendet werden.

Eine fünfte bevorzugte Ausführungsform der Erfindung unterscheidet sich von dem ersten Ausführungsbeispiel dadurch, daß den Pixeln der Darstellungsbilder nicht nur ein Pixelparameter, sondern drei Pixelparamter zugeordnet sind, die eine farbliche Codierung enthalten. Beispielsweise können RGB- oder HSI-Farbmodelle verwendet werden, wobei RGB-Parameterwerte in HSI-Parameterwerte umgerechnet werden können. Diese und weitere verwendbare Farbmodelle sowie die Umrechnung der entsprechenden Pixelparameter zwischen den verschiedenen Modell ist beispielsweise in dem Buch Haberäcker, Peter: "Praxis der digitalen Bildverarbeitung und Mustererkennung", München, Hanser 1995, ISBN 3-446-15517-1, Seiten 46 bis 57, beschrieben. Der einfacheren Darstellung halber wird im Folgenden das HSI-Modell verwendet. Die Pixelparameter $d_H(i,j,\tau_l)$, $d_S(i,j,\tau_l)$ und $d_I(i,j,\tau_l)$ geben in bekannter Weise die Farbtönung (hue), die Sättigung (saturation) und die Intensität des Pixels am Ort i, j zur Zeit $\tau_l$ wieder. Das Computerprogramm enthält gegenüber dem Computerprogramm des ersten Ausführungsbeispiels geänderte Instruktionen, um die Pixelparameter der Darstellungsbilder mit dem im Folgenden geschilderten Verfahren zu ermitteln. Die anderen Teile des ersten Ausführungsbeispiels bleiben unverändert.

Durch die höhere Dimension des Raumes der Pixelparameter können nun gleichzeitig wenigstens zwei verschiedene Auswertungen der Aufnahmebilder durchgeführt und in Darstellungsbildern dargestellt werden.

Die Sättigung, d.h. die Werte des Pixelparameters $d_S$, werden im vorliegenden Ausführungsbeispiel für alle Pixel der Darstellungsbilder auf 1 bzw. 100% gesetzt, so daß Farbe mit maximaler Sättigung angezeigt werden.

Die Intensität, d.h. die Werte des Pixelparameters $d_I$, werden auf die gleiche Weise bestimmt wie im ersten Ausführungsbeispiel.

Die Farbtönung (hue), d.h. die Werte des Pixelparameters $d_H$, werden wie im vierten Ausführungsbeispiel bestimmt, wobei die ermittelten Schwankungsbreiten linear so transformiert werden, daß sie in dem im HSI-Farbmodell zur Verfügung stehenden Bereich von Farbtönungswerten liegen. Durch Wahl der Proportionalitätskonstante kann die Feinheit der Darstellung variiert werden.

Auf diese Weise können die Aufnahmebilder gleichzeitig in Bezug auf zwei lokale Bildeigenschaften bzw. Pixeleigenschaften ausgewertet und für eine Echtzeitbeobachtung auf der Anzeigeeinrichtung 9 dargestellt werden.

In modifizierten Varianten des fünften Ausführungsbeispiels werden die Werte des Pixelparameters $d_I$ wie im zweiten bzw. dritten Ausführungsbeispiel ermittelt.

Darüber hinaus kann in einer weiteren Variante die Zuweisung der Werte für die Pixelparameter $d_I$ und $d_H$ vertauscht sein, so daß $d_I$ die Schwankungsbreite und $d_H$ das Maximum der Intensität bzw. des Grauwerts der entsprechenden Pixel der Teilfolge von Aufnahmebildern wiedergeben.

Eine sechste bevorzugte Ausführungsform der Erfindung unterscheidet sich von dem fünften Ausführungsbeispiel darin, daß nun wenigstens ein die Farbe wiedergebender Pixelparameter, beispielsweise die Farbtönung (hue) $d_H$, dazu verwendet wird, aktuelle Zustände gegenüber kurz vorher aufgetretenen Zuständen erkennbar darzustellen.

Dazu wird jedem Pixel des Aufnahmebildes neben dem Pixelparameter e noch wenigstens ein weiterer Pixelparameter $e_F$ zugeordnet, der eine Farbe bzw. Farbtönung wiedergibt. Unabhängig von der Intensität wird dem Pixelparameter $e_F$ für alle Pixel eines Aufnahmebildes in Abhängigkeit von der Erfassungszeit bzw. der Position in der Teilfolge ein Wert zugewiesen, der eine Farbe bzw. Farbtönung wiedergibt. Jeder Erfassungszeit wird daher eine andere Farbe bzw. Farbtönung zugewiesen. Die Pixel eines jeweiligen Aufnahmebildes weisen daher die gleiche, von der Erfassungszeit abhängige Farbe $e_F$, aber unterschiedliche Helligkeiten e auf. Die Farbe kann beispielsweise für ein Aufnahmebild k der Teilfolge von K Aufnahmebildern durch folgende Formel bestimmt werden:

$$e_F(i, j, t_k) = e_{F\,min} + (e_{F\,max} - e_{F\,min})\frac{k}{K}$$

$e_{Fmax}$ und $e_{Fmin}$ sind dabei der obere bzw. untere Grenzwert des möglichen Wertebereichs des Farbtönungsparameters im verwendeten HSI-Farbmodell.

Zur Ermittlung des Darstellungsbildes werden nun alle Aufnahmebilder einer dem Darstellungsbild zugeordneten Teilfolge wie Folien in einem Stapel übereinander gelegt. Eine Durchsicht durch den Stapel ergibt das Darstellungsbild.

Dies kann beispielsweise auf folgende Art und Weise erfolgen. Jedem Pixel der Aufnahmebilder der jeweiligen zur Ermittlung des Darstellungsbildes verwendeten Teilfolge wird neben der Farbe und der Helligkeit im HSI-Modell noch eine vorgegebene Sättigung zugeordnet, beispielsweise 1 bzw. 100%.

Die Pixelparameter der Pixel i,j der Aufnahmebilder der Teilfolge im HSI-Modell werden dann in entsprechende Pixelparameter $e_R(i,j, t_k)$, $e_G(i,j, t_k)$, $e_B(i,j, t_k)$ des RGB-Farbmodells für Rot, Grün und Blau umgerechnet, wozu beispielsweise aus dem oben genannten Buch bekannte Transformationsformeln verwendet werden können.

Den Pixeln i,j des Darstellungsbildes sind entsprechende Pixelparameter $d_R(i,j,\tau_l)$, $d_R(i,j,\tau_l)$, $d_B(i,j,\tau_l)$ für die Farben Rot, Grün und Blau des RGB-Modells zugeordnet. Die Werte der Pixelparameter ergeben sich dann aus den Formeln:

$$d_R(i, j, \tau_l) \;=\; \frac{1}{K}\sum_{k=1}^{K} e_R(i, j, t_k)$$

$$d_G(i, j, \tau_l) \;=\; \frac{1}{K}\sum_{k=1}^{K} e_G(i, j, t_k)$$

$$d_B(i,j,\tau_I) \;=\; \frac{1}{K}\sum_{k=1}^{K} e_B(i,j,t_k)$$

In einem folgenden Schritt wird unter den Pixel parametern $d_R(i,j,\tau_I)$, $d_G(i,j,\tau_I)$, $d_B(i,j,\tau_I)$ aller Pixel des Darstellungsbildes der Maximalwert $d_M$ bestimmt.

Daraufhin werden im nächsten Schritt alle Pixelparameter $d_R(i,j,\tau_I)$, $d_G(i,j,\tau_I)$, $d_B(i,j,\tau_I)$ durch Multiplikation mit dem Faktor $255/d_M$ so normiert, daß das Maximum der Werte der Pixelparameter $d_R(1,j,\tau_I)$, $d_G(i,i,\tau_I)$, $d_B(i,j,\tau_I)$ aller Pixel i,j des Darstellungsbildes 255 beträgt.

Die Pixelparameter des Darstellungsbildes können nun im RGB-Modell weiterverarbeitet oder angezeigt werden. Es ist jedoch auch möglich, diese zunächst wieder in das HSI-Modell umzurechnen.

In einer anderen Variante, bei dem das Darstellungsbild im HSI-Modell wiedergegeben wird, werden den Pixelparametern $d_s$ und $d_I$ der Pixel der Darstellungsbilder die gleichen Werte wie im fünften Ausführungsbeispiel oder der Varianten davon zugewiesen, d.h. zum Beispiel für das Pixel (i,j) $d_s$ der Wert 100% bzw. 1 und $d_I$ ein das Maximum von $e(i,j, t_k)$ über die jeweilige Teilfolge k=1,...,K wiedergebender Wert.

Der Pixelparameter $d_H$ für ein Pixel (i, j) dagegen erhält als Wert einen gewichteten Mittelwert der Werte des Pixelparameters $e_F$ der entsprechenden Pixel (i, j) der Aufnahmebilder der Teilfolge. Die Gewichtung erfolgt dabei in Abhängigkeit von der Stellung des jeweiligen Aufnahmebildes in der Teilfolge. In diesem Beispiel nehmen die Gewichte mit zunehmendem zeitlichen Abstand vom letzten, d.h. aktuellsten Aufnahmebild ab. Beispielsweise kann folgende Formel zur Bestimmung des Pixelparameters verwendet werden:

$$d_H(i,j,\tau_I) = \frac{\sum_{k=1}^{K} e(i,j,t_k)\,e_F(i,j,t_k)}{\sum_{k=1}^{K} e(i,j,t_k)}\,,$$

mit

$$e_F(i,j,t_k) = e_{F\,min} + (e_{F\,max} - e_{F\,min})\frac{k}{K}\,.$$

$e_{F\,max}$ und $e_{F\,min}$ sind dabei der obere bzw. untere Grenzwert des möglichen Wertebereichs des Farbtönungsparameters im verwendeten HSI-Farbmodell.

Ein siebtes Ausführungsbeispiel unterscheidet sich von dem ersten Ausführungsbeispiel dadurch, daß der Wert des Pixelparameters d des Darstellungsbildes anders ermittelt wird. Das Computerprogramm ist dazu entsprechend modifiziert, ansonsten gilt die Beschreibung des ersten Ausführungsbeispiels auch hier entsprechend.

Dem Pixelparameter jedes Pixels des zeitlich ersten Darstellungsbildes bei einer Untersuchung wird ein Wert zugeordnet wie im ersten Ausführungsbeispiel.

Die Werte für folgende Darstellungsbilder werden jedoch anders ermittelt:

Der gesetzte Wert des Pixels wird für eine vorgegebene Zeitspanne $\Delta$ konstant gehalten und fällt danach mit einer vorgegebenen Geschwindigkeit auf den Wert Null ab. Die Geschwindigkeit ist dabei so gewählt, daß ein Abfall auf Null erst nach mehreren Darstellungsbildern erfolgen kann. Sobald jedoch in der aktuellen Teilfolge der Aufnahmebilder der Wert des Pixelparameters für ein Pixel (i, j) den aktuellen Wert des Pixelparameters d(i,j) des Pixels des Darstellungsbildes übersteigt, wird dem Pixelparameter d(i,j) der neue aktuelle, größere Wert des Pixelparameters e(i, j) des Aufnahmebildes zugewiesen.

Dieser Wert wird dann wieder für die vorgegebene Zeitspanne konstant gehalten bzw. reduziert, bis ein aktueller Wert des Pixelparameters des Pixels des Aufnahmebildes den aktuellen Wert des Pixelparameters des Pixels im Darstellungsbild übersteigt.

Dies führt zu einem Nachleuchten von Pixeln hoher Intensität, so daß ein Betrachter hohe Intensitäten auf dem Bildschirm auch dann einfach erkennen kann, wenn sie nur sehr kurzzeitig auftreten.

In anderen Ausführungsbeispielen können als Farbteiler auch homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Bei einer anderen Ausführungsform wird zur Erfassung der Aufnahmebilder ein punktweise abtastenden Laser-Scanning-Mikroskops verwendet, wie es beispielsweise in DE 197 02 753 A1 beschrieben ist.

Bei noch einem anderen Ausführungsbeispiel werden zur Erzeugung der Darstellungsbilder die Darstellungsbild jeweils aus einer Teilfolge mit denjenigen Aufnahmebildern der Aufnahmebildfolge ermittelt, die innerhalb eines vorgegebenen Zeitraums, der vorzugsweise 1 s beträgt, vor der Ermittlung des Darstellungsbildes erfaßt wurden.

**Patentansprüche**

1. Verfahren zur Erzeugung von Darstellungsbildern (42) aus Aufnahmebildern (41) zur Verfolgung von Zustandsänderungen, bei dem eine zeitliche Folge von Aufnahmebildern (41) von einem zu beobachtenden Objekt mittels eines Mikroskops erfasst wird, und aus der Aufnahmebildfolge eine zeitliche Folge von Darstellungsbildern (42) zur Darstellung der Zustandsänderungen ermittelt wird, wobei jeweils ein Darstellungsbild der Darstellungsbildfolge aus einer diesem zugeordneten Teilfolge mit wenigstens zwei bereits erfassten Aufnahmebildern (41) der Aufnahmebildfolge erzeugt wird, wobei sich die Teilfolgen, aus denen zwei aufeinanderfolgende Darstellungsbilder erzeugt werden, überlappen, indem sie ein gleiches Aufnahmebild umfassen.

2. Verfahren nach Anspruch 1, bei dem die Anzahl der Darstellungsbilder (42) der Folge von Darstellungsbildern (42) kleiner als die Anzahl der Aufnahmebilder (41) der Aufnahmebildfolge ist.

3. Verfahren nach Anspruch 1 oder 2, bei dem zur Erzeugung der Darstellungsbilder (42) wenigstens ein Darstellungsbild (42) aus einer Teilfolge mit denjenigen Aufnahmebildern (41) der Aufnahmebildfolge ermittelt wird, die während oder nach der Ermittlung des unmittelbar dem Darstellungsbild (42) vorhergehenden Darstellungsbildes (42) und/oder innerhalb eines vorgegebenen Zeitraums, der vorzugsweise 1 s beträgt, vor der Ermittlung des Darstellungsbildes (42) erfasst wurden.

4. Verfahren nach einem der vorhergehenden Ansprüche, bei dem die Aufnahme- und die Darstellungsbilder (41, 42) durch eine Anordnung von Pixeln (40, 43) gebildet werden, und bei dem zur Ermittlung wenigstens eines Darstellungsbildes (42) der Wert wenigstens eines Pixelparameters wenigstens eines Pixels (43) des Darstellungsbildes (42) aus Werten eines Pixelparameters wenigstens eines dem Pixel (43) des jeweiligen Darstellungsbildes (42) zugeordneten Aufnahmebildpixels in der dem Darstellungsbild zugeordneten Teilfolge von bereits erfassten Aufnahmebildern (41) ermittelt wird.

5. Verfahren nach Anspruch 4, bei dem der Aufnahmebildpixelparameter eine Intensität, einen Graustufenwert oder eine Helligkeit des Aufnahmebildpixels (40) wiedergibt, und bei dem zwei Pixelparameter eines Pixels (43) des Darstellungsbildes (42) eine Farbe und Helligkeit des Pixels (43) in Abhängigkeit von Werten des Aufnahmebildpixelparameters des zugeordneten Pixels (40) der zugeordneten Teilfolge von Aufnahmebildern (41) wiedergeben.

6. Verfahren nach Anspruch 4 oder 5, bei dem der Aufnahmebildpixelparameter eine Intensität, einen Graustufenwert oder eine Helligkeit des Aufnahmebildpixels (40) wiedergibt, und bei dem der Wert des wenigstens einen Pixelparameters eines Pixels (43) des jeweiligen Darstellungsbildes (42) das Maximum, das Minimum oder einen Mittelwert des Aufnahmebildpixelparameters des zugeordneten Pixels (40) der zugeordneten Teilfolge der Aufnahmebilder (41) wiedergibt.

7. Verfahren nach Anspruch 4 oder 5, bei dem der Aufnahmebildpixelparameter eine Intensität, einen Graustufenwert oder eine Helligkeit des Aufnahmebildpixels wiedergibt, und der wenigstens eine Pixelparameter des Pixels (43) des jeweiligen Darstellungsbildes (42) die Schwankungsbreite der Werte des Aufnahmebildpixelparameters des dem Darstellungsbildpixel (43) zugeordneten Pixels (40) der zugeordneten Teilfolge bereits erfasster Aufnahmebilder (41) wiedergibt.

8. Verfahren nach einem der Ansprüche 4 bis 7, bei dem der Wert wenigstens eines Pixelparameters wenigstens eines Pixels (43) des Darstellungsbildes (42) in Abhängigkeit von dem zeitlichen Verlauf der Werte wenigstens eines Pixelparameters wenigstens eines Pixels (40) der Aufnahmebilder (42) der dem Darstellungsbild zugeordneten Teilfolge ermittelt wird.

9. Verfahren nach einem der Ansprüche 4 bis 6, bei dem wenigstens einem Pixel (40) der Aufnahmebilder (42) einer Teilfolge als Pixelparameter jeweils eine Farbe zugeordnet wird, die der Position des Aufnahmebildes (42) in der Teilfolge bzw. der Erfassungszeit entspricht, und bei dem in Abhängigkeit von den Werten des Pixelparameters ein Wert eines eine Farbe wiedergebender Pixelparameters eines dem Aufnahmebildpixel (40) zugeordneten Darstellungsbildpixels (43) ermittelt wird.

10. Verfahren nach einem der vorhergehenden Ansprüche, bei dem wenigstens einem Pixel (43) des Darstellungsbildes (42) als Pixelparameter das Maximum der Helligkeiten der dem Pixel (43) zugeordneten Pixel (40) der zugeordneten Teilfolge von vorhergehenden Aufnahmebildern (41) zugeordnet wird, dann der Helligkeitswert für eine vorgegebenen Zeit beibehalten und danach mit einer vorgegebenen Abfallgeschwindigkeit reduziert wird, wobei der Helligkeitswert des Pixels (43) des Darstellungsbildes (42) neu gesetzt wird, wenn ein Helligkeitswert des zugeordneten Pixels (40) in einem aktuellen Aufnahmebild (41) größer als der aktuelle Helligkeitswert des Pixels in dem Darstellungsbild (42) ist.

11. Mikroskop zur Verfolgung von Zustandsänderungen mit einer Bildverarbeitungseinrichtung, die eine Erfassungsschnittstelle (46) zur Erfassung von Aufnahmebilddaten oder -Signalen und eine Graphikschnittstelle (47) für eine Anzeigeeinrichtung (9) umfasst und die so ausgebildet ist, dass über die Erfassungsschnittstelle (46) und eine damit verbundene Bilddatenerfassungseinrichtung (7) eine zeitliche Folge von Aufnahmebildern (41) von einem zu beobachtenden Objekt erfassbar und aus der Aufnahmebildfolge eine zeitliche Folge von Darstellungsbildern (42) zur Darstellung der Zustandsänderungen erzeugbar ist, wobei jeweils ein Darstellungsbild (42) der Darstellungsbildfolge aus einer diesem zugeordneten Teilfolge mit wenigstens zwei bereits erfassten Aufnahmebildern (41) der Aufnahmebildfolge erzeugt wird, und die Darstellungsbilder (42) über die Graphikschnittstelle (47) an die Anzeigeeinrichtung (9) ausgebbar sind, wobei sich die Teilfolgen, aus denen zwei aufeinanderfolgende Darstellungsbilder erzeugt werden, überlappen, indem sie ein gleiches Aufnahmebild umfassen.

12. Mikroskop nach Anspruch 11, die weiter so ausgebildet ist, dass die Anzahl der Darstellungsbilder (42) der Folge von Darstellungsbildern (42) kleiner als die Anzahl der Aufnahmebilder (41) der Aufnahmebildfolge ist.

13. Mikroskop nach Anspruch 11 oder 12, die weiter so ausgebildet ist, dass zur Erzeugung der Darstellungsbilder (42) wenigstens ein Darstellungsbild (42) aus einer Teilfolge mit denjenigen Aufnahmebildern (41) der Aufnahmebildfolge ermittelt wird, die während oder nach der Ermittlung des unmittelbar dem Darstellungsbild (42) vorhergehenden Darstellungsbildes (42) und/oder nur innerhalb eines vorgegebenen Zeitraums, der vorzugsweise 1 s beträgt, vor der Ermittlung des Darstellungsbildes (42) erfasst wurden.

14. Mikroskop nach einem der Ansprüche 11 bis 13, bei der die Aufnahme- und die Darstellungsbilder (41, 42) durch eine Anordnung von Pixeln (40, 43) gebildet werden, und die weiter so ausgebildet ist, dass zur Ermittlung wenigstens eines Darstellungsbildes (42) der Wert wenigstens eines Pixelparameters wenigstens eines Pixels (43) des Darstellungsbildes (42) aus Werten eines Pixelparameters wenigstens eines dem Pixel (43) des jeweiligen Darstellungsbildes (42) zugeordneten Aufnahmebildpixels (40) in der dem Darstellungsbild (42) zugeordneten Teilfolge von bereits erfassten Aufnahmebildern (41) ermittelt wird.

15. Mikroskop nach Anspruch 14, die weiter so ausgebildet ist, dass der Aufnahmebildpixelparameter eine Intensität, einen Graustufenwert oder eine Helligkeit des Aufnahmebildpixels wiedergibt, und zwei Pixelparameter eines Pixels (43) des Darstellungsbildes (42) eine Farbe und Helligkeit des Pixels (43) in Abhängigkeit von Werten des Aufnahmebildpixelparameters des zugeordneten Pixels (40) der zugeordneten Teilfolge von Aufnahmebildern (41) wiedergeben.

16. Mikroskop nach Anspruch 14, die weiter so ausgebildet ist, dass der Aufnahmebildpixelparameter eine Intensität, einen Graustufenwert oder eine Helligkeit des Aufnahmebildpixels wiedergibt, und dass der Wert des wenigstens einen Pixelparameters eines Pixels (43) des jeweiligen Darstellungsbildes (42) das Maximum, das Minimum oder einen Mittelwert des Aufnahmebildpixelparameters des zugeordneten Pixels (40) der zugeordneten Teilfolge der Aufnahmebilder (40) wiedergibt.

17. Mikroskop nach Anspruch 14, die weiter so ausgebildet ist, dass der Aufnahmebildpixelparameter eine Intensität, einen Graustufenwert oder eine Helligkeit des Aufnahmebildpixels wiedergibt, und der wenigstens eine Pixelparameter des Pixels (43) des jeweiligen Darstellungsbildes (42) die Schwankungsbreite der Werte des Aufnahmebildpixelparameters der dem Darstellungsbildpixel (43) zugeordneten Pixel (40) der zugeordneten Teilfolge bereits erfasster Aufnahmebilder (41) wiedergibt.

**18.** Mikroskop nach einem der Ansprüche 14 bis 17, die weiter so ausgebildet ist, dass der Wert wenigstens eines Pixelparameters wenigstens eines Pixels des Darstellungsbildes (42) in Abhängigkeit von dem zeitlichen Verlauf der Werte wenigstens eines Pixelparameters wenigstens eines Pixels (40) der Aufnahmebilder (41) der dem Darstellungsbild (42) zugeordneten Teilfolge ermittelt wird.

**19.** Mikroskop nach einem der Ansprüche 14 bis 17, die weiter so ausgebildet ist, dass wenigstens einem Pixel (40) der Aufnahmebilder (41) einer Teilfolge als Pixelparameter jeweils eine Farbe zugeordnet wird, die der Position des Aufnahmebildes (41) in der Teilfolge bzw. der Erfassungszeit entspricht, und in Abhängigkeit von den Werten des Pixelparameters ein Wert eines eine Farbe wiedergebender Pixelparameters eines dem Aufnahmebildpixel (40) zugeordneten Darstellungsbildpixels (42) ermittelt wird.

**20.** Mikroskop nach einem der Ansprüche 14 bis 17, die weiter so ausgebildet ist, dass wenigstens einem Pixel (43) des Darstellungsbildes (42) als Pixelparameter das Maximum der Helligkeiten der dem Pixel (43) zugeordneten Pixel (40) der zugeordneten Teilfolge von vorhergehenden Aufnahmebildern (41) zugeordnet wird, dann der Helligkeitswert für eine vorgegebene Zeit beibehalten und danach mit einer vorgegebenen Abfallgeschwindigkeit reduziert wird, wobei der Helligkeitswert des Pixels (43) des Darstellungsbildes (42) neu gesetzt wird, wenn ein Helligkeitswert des zugeordneten Pixels (40) in einem aktuellen Aufnahmebild (41) größer als der aktuelle Helligkeitswert des Pixels (43) in dem Darstellungsbild (42) ist.

**21.** Mikroskop nach einem der Ansprüche 11 bis 20 mit einer Abbildungsoptik zur Abbildung eines Objekts auf die Bilddatenerfassungseinrichtung (7).

**22.** Mikroskop nach Anspruch 21, wobei das Mikroskop als Laser-Scanning-Mikroskop (1) ausgebildet ist.

**23.** Mikroskop nach Anspruch 22, bei dem die Bilddatenerfassungseinrichtung (7) gleichzeitig einen wenigstens linienförmigen Bereich oder eine Gruppe von Punkten einer Probe (2) erfasst.

**24.** Computerprogramm für eine Datenverarbeitungseinrichtung, die eine Erfassungsschnittstelle (46) zur Erfassung von Aufnahmebilddaten oder -Signalen mittels eines Mikroskops, eine Graphikschnittstelle (47) für eine Anzeigeeinrichtung (9), einen Speicher (48), in dem Daten und das Computerprogramms gespeichert sind, und wenigstens einem mit den Schnittstellen (46, 47) und dem Speicher verbundenen Prozessor (49), umfasst, das Instruktionen umfasst, bei deren Ausführung der Prozessor (49) ein Verfahren nach einem der Ansprüche 1 bis 10 ausführt und die erzeugten Darstellungsbilder (42) über die Graphikschnittstelle (47) an die Anzeigeeinrichtung (9) ausgibt.

**25.** Speichermedium, auf dem ein Computerprogramm nach Anspruch 24 gespeichert ist.


**Claims**

**1.** Method for generating display images (42) from recorded images (41) for tracking state changes, in which a temporal sequence of recorded images (41) of an object to be observed is captured by means of a microscope, and a temporal sequence of display images (42) for displaying the state changes is established from the recorded image sequence, wherein respectively one display image of the display image sequence is generated from a subsequence associated therewith with at least two already captured recorded images (41) of the recorded image sequence, wherein the subsequences from which two successive display images are generated overlap by virtue of comprising an identical recorded image.

**2.** Method according to Claim 1, in which the number of display images (42) of the sequence of display images (42) is smaller than the number of recorded images (41) of the recorded image sequence.

**3.** Method according to Claim 1 or 2, in which, for the purposes of generating the display images (42), at least one display image (42) is established from a subsequence with those recorded images (41) of the recorded image sequence which were captured during or after establishing the display image (42) immediately preceding the display image (42) and/or within a predetermined period of time, which is preferably 1 s, before establishing the display image (42).

**4.** Method according to one of the preceding claims, in which the recorded and display images (41, 42) are formed by an arrangement of pixels (40, 43) and in which, for the purposes of establishing at least one display image (42), the value of at least one pixel parameter of at least one pixel (43) of the display image (42) is established from values of a pixel parameter of at least one recorded image pixel associated with the pixel (43) of the respective display image (42) in the subsequence, associated with the display image, of already captured recorded images (41).

5.  Method according to Claim 4, in which the recorded image pixel parameter reproduces an intensity, a greyscale value or a brightness of the recorded image pixel (40) and in which two pixel parameters of a pixel (43) of the display image (42) reproduce a colour and brightness of the pixel (43) dependent on values of the recorded image pixel parameter of the associated pixel (40) of the associated subsequence of recorded images (41).

6.  Method according to Claim 4 or 5, in which the recorded image pixel parameter reproduces an intensity, a greyscale value or a brightness of the recorded image pixel (40) and in which the value of the at least one pixel parameter of a pixel (43) of the respective display image (42) reproduces the maximum, the minimum or an average of the recorded image pixel parameter of the associated pixel (40) of the associated subsequence of the recorded images (41).

7.  Method according to Claim 4 or 5, in which the recorded image pixel parameter reproduces an intensity, a greyscale value or a brightness of the recorded image pixel and the at least one pixel parameter of the pixel (43) of the respective display image (42) reproduces the degree of variation of the values of the recorded image pixel parameter of the pixel (40), associated with the display image pixel (43), of the associated subsequence of already captured recorded images (41).

8.  Method according to one of Claims 4 to 7, in which the value of at least one pixel parameter of at least one pixel (43) of the display image (42) is established dependent on the time profile of the values of at least one pixel parameter of at least one pixel (40) of the recorded images (41) of the subsequence associated with the display image.

9.  Method according to one of Claims 4 to 6, in which at least one pixel (40) of the recorded images (41) of a subsequence is respectively associated with a colour as pixel parameter, which colour corresponds to the position of the recorded image (41) in the subsequence or the capture time, and in which, depending on the values of the pixel parameter, a value of a pixel parameter, reproducing a colour, of a display image pixel (43) associated with the recorded image pixel (40) is established.

10. Method as claimed in one of the preceding claims, in which at least one pixel (43) of the display image (42) is associated with the maximum of the brightnesses of the pixels (40), associated with the pixel (43), of the associated subsequence of preceding recorded images (41) as a pixel parameter, the brightness value then being maintained for a predetermined time and thereafter being reduced at a predetermined decay rate, wherein the brightness value of the pixel (43) of the display image (42) is reset if a brightness value of the associated pixel (40) in a current recorded image (41) is greater than the current brightness value of the pixel in the display image (42).

11. Microscope for following state changes with an image processing apparatus, which comprises a capturing interface (46) for capturing recorded image data or signals and a graphics interface (47) for a display apparatus (9) and which is embodied such that, via the capturing interface (46) and an image data capturing apparatus (7) connected thereto, a temporal sequence of recorded images (41) can be captured of an object to be observed and, from the recorded image sequence, it is possible to generate a temporal sequence of display images (42) for displaying the state changes, wherein respectively one display image (42) of the display image sequence is generated from a subsequence associated therewith with at least two already captured recorded images (41) of the recorded image sequence and the display images (42) can be output to the display apparatus (9) via the graphics interface (47), wherein the subsequences from which two successive display images are generated overlap by virtue of comprising an identical recorded image.

12. Microscope according to Claim 11, which is furthermore embodied such that the number of display images (42) of the sequence of display images (42) is smaller than the number of recorded images (41) of the recorded image sequence.

13. Microscope according to Claim 11 or 12, which is furthermore embodied such that, for the purposes of generating the display images (42), at least one display image (42) is established from a subsequence with those recorded images (41) of the recorded image sequence which were captured during or after establishing the display image (42) immediately preceding the display image (42) and/or only within a predetermined period of time, which is preferably 1 s, before establishing the display image (42).

**14.** Microscope according to one of Claims 11 to 13, in which the recorded and display images (41, 42) are formed by an arrangement of pixels (40, 43) and which is furthermore embodied such that, for the purposes of establishing at least one display image (42), the value of at least one pixel parameter of at least one pixel (43) of the display image (42) is established from values of a pixel parameter of at least one recorded image pixel (40) associated with the pixel (43) of the respective display image (42) in the subsequence, associated with the display image (42), of already captured recorded images (41).

**15.** Microscope according to Claim 14, which is furthermore embodied such that the recorded image pixel parameter reproduces an intensity, a greyscale value or a brightness of the recorded image pixel and two pixel parameters of a pixel (43) of the display image (42) reproduce a colour and brightness of the pixel (43) dependent on values of the recorded image pixel parameter of the associated pixel (40) of the associated subsequence of recorded images (41).

**16.** Microscope according to Claim 14, which is furthermore embodied such that the recorded image pixel parameter reproduces an intensity, a greyscale value or a brightness of the recorded image pixel and that the value of the at least one pixel parameter of a pixel (43) of the respective display image (42) reproduces the maximum, the minimum or an average of the recorded image pixel parameter of the associated pixel (40) of the associated subsequence of the recorded images (41).

**17.** Microscope according to Claim 14, which is furthermore embodied such that the recorded image pixel parameter reproduces an intensity, a greyscale value or a brightness of the recorded image pixel and the at least one pixel parameter of the pixel (43) of the respective display image (42) reproduces the degree of variation of the values of the recorded image pixel parameter of the pixels (40), associated with the display image pixel (43), of the associated subsequence of already captured recorded images (41).

**18.** Microscope according to one of Claims 14 to 17, which is furthermore embodied such that the value of at least one pixel parameter of at least one pixel of the display image (42) is established dependent on the time profile of the values of at least one pixel parameter of at least one pixel (40) of the recorded images (41) of the subsequence associated with the display image (42).

**19.** Microscope according to one of Claims 14 to 17, which is furthermore embodied such that at least one pixel (40) of the recorded images (41) of a subsequence is respectively associated with a colour as pixel parameter, which colour corresponds to the position of the recorded image (41) in the subsequence or the capture time, and, depending on the values of the pixel parameter, a value of a pixel parameter, reproducing a colour, of a display image pixel (43) associated with the recorded image pixel (40) is established.

**20.** Microscope according to one of Claims 14 to 17, which is furthermore embodied such that at least one pixel (43) of the display image (42) is associated with the maximum of the brightnesses of the pixels (40), associated with the pixel (43), of the associated subsequence of preceding recorded images (41) as a pixel parameter, the brightness value then being maintained for a predetermined time and thereafter being reduced at a predetermined decay rate, wherein the brightness value of the pixel (43) of the display image (42) is reset if a brightness value of the associated pixel (40) in a current recorded image (41) is greater than the current brightness value of the pixel (43) in the display image (42).

**21.** Microscope according to one of Claims 11 to 20, having an imaging optical system for imaging an object on the image data capturing apparatus (7).

**22.** Microscope according to Claim 21, wherein the microscope is embodied as laser scanning microscope (1).

**23.** Microscope according to Claim 22, in which the image data capturing apparatus (7) simultaneously captures an at least line-shaped region or a group of points of a sample (2).

**24.** Computer program for a data processing apparatus, which comprises a capturing interface (46) for capturing recorded image data or signals by means of a microscope, a graphics interface (47) for a display apparatus (9), a memory (48) in which data and the computer program are stored and at least one processor (49) connected to the interfaces (46, 37) and the memory, which computer program comprises instructions which, when executed, cause the processor (49) to execute a method according to one of Claims 1 to 10 and output the generated display images (42) to the display apparatus (9) via the graphics interface (47).

**25.** Storage medium, on which a computer program according to Claim 24 is stored.

**Revendications**

**1.** Procédé pour générer des images de représentation (42) à partir d'images d'acquisition (41) pour le suivi de changements d'état, dans lequel une séquence temporelle d'images d'acquisition (41) d'un objet à observer est acquise au moyen d'un microscope, et une séquence temporelle d'images de représentation (42) est déterminée à partir de la séquence d'images d'acquisition pour représenter les changements d'état, dans lequel une image de représentation respective de la séquence d'images de représentation est générée à partir d'une séquence partielle qui lui est associée comprenant au moins deux images d'acquisition déjà acquises (41) de la séquence d'images d'acquisition, dans lequel les séquences partielles à partir desquelles deux images de représentation successives sont générées se chevauchent en raison du fait qu'elles comprennent une même image d'acquisition.

**2.** Procédé selon la revendication 1, dans lequel le nombre d'images de représentation (42) de la séquence d'images de représentation (42) est inférieur au nombre d'images d'acquisition (41) de la séquence d'images d'acquisition.

**3.** Procédé selon la revendication 1 ou 2, dans lequel, pour générer les images de représentation (42), au moins une image de représentation (42) est déterminée à partir d'une séquence partielle comprenant les images d'acquisition (41) de la séquence d'images d'acquisition qui ont été acquises pendant ou après la détermination de l'image de représentation (42) précédant immédiatement l'image de représentation (42) et/ou pendant une période prédéterminée d'une durée préférée de 1 s, avant la détermination de l'image de représentation (42).

**4.** Procédé selon l'une quelconque des revendications précédentes, dans lequel les images d'acquisition et de représentation (41, 42) sont constituées d'un agencement de pixels (40, 43) et dans lequel, pour déterminer au moins une image de représentation (42), la valeur d'au moins un paramètre de pixel d'au moins un pixel (43) de l'image de représentation (42) est déterminée à partir de valeurs d'un paramètre de pixel d'au moins un pixel d'image d'acquisition associé au pixel (43) de l'image de représentation respective (42) dans la séquence partielle, associée à l'image de représentation, d'images d'acquisition déjà acquises (41).

**5.** Procédé selon la revendication 4, dans lequel le paramètre de pixel d'image d'acquisition représente une intensité, une valeur d'échelle de gris ou une luminosité du pixel d'image d'acquisition (40), et dans lequel deux paramètres de pixel d'un pixel (43) de l'image de représentation (42) représentent une couleur et une luminosité du pixel (43) en fonction de valeurs du paramètre de pixel d'image d'acquisition du pixel associé (40) de la séquence partielle associée d'images d'acquisition (41).

**6.** Procédé selon la revendication 4 ou 5, dans lequel le paramètre de pixel d'image d'acquisition représente une intensité, une valeur d'échelle de gris ou une luminosité du pixel d'image d'acquisition (40), et dans lequel la valeur de l'au moins un paramètre de pixel d'un pixel (43) de l'image de représentation respective (42) représente le maximum, le minimum ou une valeur moyenne du paramètre de pixel d'image d'acquisition du pixel associé (40) de la séquence partielle associée des images d'acquisition (41).

**7.** Procédé selon la revendication 4 ou 5, dans lequel le paramètre de pixel d'image d'acquisition représente une intensité, une valeur d'échelle de gris ou une luminosité du pixel d'image d'acquisition, et l'au moins un paramètre de pixel du pixel (43) de l'image de représentation respective (42) représente la plage de fluctuation des valeurs du paramètre de pixel d'image d'acquisition du pixel (40) associé au pixel d'image de représentation (43) de la séquence partielle associée d'images d'acquisition déjà acquises (41).

**8.** Procédé selon l'une quelconque des revendications 4 à 7, dans lequel la valeur d'au moins un paramètre de pixel d'au moins un pixel (43) de l'image de représentation (42) est déterminée en fonction de l'évolution temporelle des valeurs d'au moins un paramètre de pixel d'au moins un pixel (40) des images d'acquisition (41) de la séquence partielle associée à l'image de représentation.

**9.** Procédé selon l'une quelconque des revendications 4 à 6, dans lequel une couleur est respectivement associée à au moins un pixel (40) des images d'acquisition (41) d'une séquence partielle en tant que paramètre de pixel, laquelle couleur correspondant à la position de l'image d'acquisition (41) dans la séquence partielle ou à l'instant d'acquisition, et dans lequel une valeur d'un paramètre de pixel représentant une couleur d'un pixel d'image de représentation (43) associé au pixel d'image d'acquisition (40) est déterminée en fonction des valeurs du paramètre de pixel.

10. Procédé selon l'une quelconque des revendications précédentes, dans lequel le maximum des luminosités des pixels (40) associés au pixel (43) de la séquence partielle associée d'images d'acquisition précédentes (41) est associé à au moins un pixel (43) de l'image de représentation (42) en tant que paramètre de pixel, la valeur de luminosité est ensuite conservée pendant un temps prédéterminé puis est réduite avec une vitesse de décroissance prédéterminée, la valeur de luminosité du pixel (43) de l'image de représentation (42) étant réinitialisée lorsqu'une valeur de luminosité du pixel associé (40) dans une image d'acquisition courante (41) est supérieure à la valeur de luminosité courante du pixel dans l'image de représentation (42).

11. Microscope pour le suivi de changements d'état comprenant un dispositif de traitement d'images qui comprend une interface d'acquisition (46) destinée à l'acquisition de données ou de signaux d'images d'acquisition et une interface graphique (47) destinée à un dispositif d'affichage (9) et qui est conçu de manière à ce qu'une séquence temporelle d'images d'acquisition (41) d'un objet à observer puisse être acquise par l'intermédiaire de l'interface d'acquisition (46) et d'un dispositif d'acquisition de données d'images (7) qui lui est relié et à ce qu'une séquence temporelle d'images de représentation (42) puisse être générée à partir de la séquence d'images d'acquisition pour la représentation de changements d'état, dans lequel une image de représentation respective (42) de la séquence d'images de représentation est générée à partir d'une séquence partielle qui lui est associée comprenant au moins deux images d'acquisition (41) déjà acquises de la séquence d'images d'acquisition, et dans lequel les images de représentation (42) peuvent être délivrées au dispositif d'affichage (9) par l'intermédiaire de l'interface graphique (47), les séquences partielles à partir desquelles deux images de représentation successives sont générées se chevauchant en raison du fait qu'elle comprennent une même image d'acquisition.

12. Microscope selon la revendication 11, qui est en outre conçu de manière à ce que le nombre des images de représentation (42) de la séquence d'images de représentation (42) soit inférieur au nombre d'images d'acquisition (41) de la séquence d'images d'acquisition.

13. Microscope selon la revendication 11 ou 12, qui est en outre conçu pour générer les images de représentation (42) de manière à déterminer au moins une image de représentation (42) à partir d'une séquence partielle comprenant les images d'acquisition (41) de la séquence d'images d'acquisition qui ont été acquises pendant ou après la détermination de l'image de représentation (42) précédant immédiatement l'image de représentation (42) et/ou uniquement pendant une période prédéterminée d'une durée préférée de 1 s, avant la détermination de l'image de représentation (42).

14. Microscope selon l'une quelconque des revendications 11 à 13, dans lequel les images d'acquisition et de représentation (41, 42) sont constituées d'un agencement de pixels (40, 43) et qui est en outre conçu de manière à ce que, pour déterminer au moins une image de représentation (42), la valeur d'au moins un paramètre de pixel d'au moins un pixel (43) de l'image de représentation (42) soit déterminée à partir de valeurs d'un paramètre de pixel d'au moins un pixel d'image d'acquisition (40) associé au pixel (43) de l'image de représentation respective (42) dans la séquence partielle, associée à l'image de représentation (42), d'images d'acquisition déjà acquises (41).

15. Microscope selon la revendication 14, qui est en outre conçu de manière à ce que le paramètre de pixel d'image d'acquisition représente une intensité, une valeur d'échelle de gris ou une luminosité du pixel d'image d'acquisition, et à ce que deux paramètres de pixel d'un pixel (43) de l'image de représentation (42) représentent une couleur et une luminosité du pixel (43) en fonction de valeurs du paramètre de pixel d'image d'acquisition du pixel associé (40) de la séquence partielle associée d'images d'acquisition (41).

16. Microscope selon la revendication 14, qui est en outre conçu de manière à ce que le paramètre de pixel d'image d'acquisition représente une intensité, une valeur d'échelle de gris ou une luminosité du pixel d'image d'acquisition, et à ce que la valeur de l'au moins un paramètre de pixel d'un pixel (43) de l'image de représentation respective (42) représente le maximum, le minimum ou une valeur moyenne du paramètre de pixel d'image d'acquisition du pixel associé (40) de la séquence partielle associée des images d'acquisition (41).

17. Microscope selon la revendication 14, qui est en outre conçu de manière à ce que le paramètre de pixel d'image d'acquisition représente une intensité, une valeur d'échelle de gris ou une luminosité du pixel d'image d'acquisition, et à ce que l'au moins un paramètre de pixel du pixel (43) de l'image de représentation respective (42) représente la plage de fluctuation des valeurs du paramètre de pixel d'image d'acquisition du pixel (40) associé au pixel d'image de représentation (43) de la séquence partielle associée d'images d'acquisition déjà acquises (41).

18. Microscope selon l'une quelconque des revendications 14 à 17, qui est en outre conçu de manière à ce que la valeur d'au moins un paramètre de pixel d'au moins un pixel de l'image de représentation (42) soit déterminée en fonction de l'évolution temporelle des valeurs d'au moins un paramètre de pixel d'au moins un pixel (40) des images d'acquisition (41) de la séquence partielle associée à l'image de représentation (42).

19. Microscope selon l'une quelconque des revendications 14 à 17, qui est en outre conçu de manière à ce qu'une couleur soit respectivement associée à au moins un pixel (40) des images d'acquisition (41) d'une séquence partielle en tant que paramètre de pixel, laquelle couleur correspondant à la position de l'image d'acquisition (41) dans la séquence partielle ou à l'instant d'acquisition, et à ce qu'une valeur d'un paramètre de pixel représentant une couleur d'un pixel d'image de représentation (43) associé au pixel d'image d'acquisition (40) soit déterminée en fonction des valeurs du paramètre de pixel.

20. Microscope selon l'une quelconque des revendications 14 à 17, qui est en outre conçu de manière à ce que le maximum des luminosités des pixels (40) associés au pixel (43) de la séquence partielle associée d'images d'acquisition précédentes (41) soit associé à au moins un pixel (43) de l'image de représentation (42) en tant que paramètre de pixel, à ce que la valeur de luminosité soit ensuite conservée pendant un temps prédéterminé puis soit réduite avec une vitesse de décroissance prédéterminée, la valeur de luminosité du pixel (43) de l'image de représentation (42) étant réinitialisée lorsqu'une valeur de luminosité du pixel associé (40) dans une image d'acquisition courante (41) est supérieure à la valeur de luminosité courante du pixel (43) dans l'image de représentation (42).

21. Microscope selon l'une quelconque des revendications 11 à 20, comprenant une optique de formation d'image pour former l'image d'un objet sur le dispositif d'acquisition de données d'images (7).

22. Microscope selon la revendication 21, dans lequel le microscope est conçu sous la forme d'un microscope à balayage à laser (1).

23. Microscope selon la revendication 22, dans lequel le dispositif d'acquisition de données d'images (7) acquiert simultanément une région au moins linéaire ou un groupe de points d'un échantillon (2).

24. Programme informatique destiné à un dispositif de traitement de données qui comprend une interface d'acquisition (46) destinée à l'acquisition de données ou de signaux d'images d'acquisition au moyen d'un microscope, une interface graphique (47) destinée à un dispositif d'affichage (9), une mémoire (48) dans laquelle sont stockés des données et le programme informatique, et au moins un processeur (49) relié aux interfaces (46, 47) et à la mémoire, qui comprend des instructions lors de l'exécution desquelles le processeur (49) met en oeuvre un procédé selon l'une des revendications 1 à 10 et délivre au dispositif d'affichage (9) par l'intermédiaire de l'interface graphique (47) les images de représentation générées (42) .

25. Support de mémoire sur lequel est stocké un programme informatique selon la revendication 24.

Fig. 1

EP 1 929 353 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10257237 A1

- DE 19702753 A1

**In der Beschreibung aufgeführte Nicht-Patentliteratur**

- **BUCH HABERÄCKER, PETER.** Praxis der digitalen Bildverarbeitung und Mustererkennung. Hanser, 1995, 46-57